# EUROPEAN PATENT APPLICATION

(11) **EP 2 450 920 A1**
(43) Date of publication of application: **09.05.2012**
(21) Application number: 09846817.6
(22) Date of filing: 02.07.2009
(51) Int. Cl.: H01F 38/14

(54) **COIL UNIT, NONCONTACT POWER RECEIVING DEVICE, NONCONTACT POWER FEEDING DEVICE, NONCONTACT POWER FEEDING SYSTEM, AND VEHICLE**

(71) Applicant: Toyota Jidosha Kabushiki Kaisha, Toyota-shi, Aichi 471-8571 (JP)
(72) Inventor: ICHIKAWA, Shinji, Aichi 471-8571 (JP); SASAKI, Masaru, Aichi 471-8571 (JP); NAKAMURA, Toru, Aichi 471-8571 (JP); KIKUCHI, Taira, Aichi 471-8571 (JP); YAMAMOTO, Yukihiro, Aichi 471-8571 (JP)
(74) Representative: TBK
(86) International application number: PCT/JP2009/062104
(87) International publication number: WO 2011/001524

(57) **Abstract**

In a noncontact electric power feeding system by means of a resonance method, an electric power receiving apparatus (110) includes a plurality of secondary self-resonant coils (112, 113). The noncontact electric power feeding system makes a switch between these secondary self-resonant coils (112, 113) to detect a distance between the electric power receiving apparatus (110) and an electric power transmitting unit, and selects, according to distance L as detected, a secondary self-resonant coil with high transfer efficiency for receiving electric power to accordingly feed electric power. In this way, distance L between the power receiving apparatus (110) and the power transmitting unit can be precisely detected including distances from longer ones to shorter ones, and the transmission efficiency in transmitting electric power in a noncontact manner by means of the resonance method can be improved.

## Description

### TECHNICAL FIELD

The present invention relates to a coil unit, a noncontact power receiving apparatus, a noncontact power transmitting apparatus, a noncontact power feeding system, and a vehicle, and more specifically to a noncontact electric power feeding system including a plurality of self-resonant coils.

### BACKGROUND ART

Electrically powered vehicles such as electric vehicles and hybrid vehicles are of great interest as they are environmentally-friendly vehicles. These vehicles are each mounted with an electric motor generating driving force for the vehicle to travel as well as a rechargeable power storage device storing electric power to be supplied to the electric motor. The hybrid vehicles include a vehicle mounted with an internal combustion engine as a source of motive power in addition to the electric motor, and a vehicle mounted with a fuel cell as a source of DC (direct current) electric power for driving the vehicle in addition to the power storage device.

It is known that some hybrid vehicles have a power storage device mounted on the vehicle and chargeable from an electric power supply external to the vehicle, like the electric vehicles. For example, a so-called "plug-in hybrid vehicle" is known that has a power storage device chargeable from a power supply of an ordinary household by connecting a power supply outlet provided at the house and a charging inlet provided at the vehicle by means of a charging cable.

As for the way to transmit electric power, wireless power transmission without using power supply cord and power transmission cable has been of interest in recent years. Three techniques are known as predominant wireless power transmission techniques, namely power transmission by means of electromagnetic induction, power transmission by means of electromagnetic wave and power transmission by means of a resonance method.

Among these techniques, the resonance method is a noncontact power transmission technique according to which a pair of resonators (a pair of self-resonant coils for example) is caused to resonate in an electromagnetic field (near field) and electric power is transmitted through the electromagnetic field. With the resonance method, a large amount of electric power of a few kW can be transmitted over a relatively long distance (a few meters for example) (Patent Document 1).
Patent Document 1: WO 2007/008646

### DISCLOSURE OF THE INVENTION

### PROBLEMS TO BE SOLVED BY THE INVENTION

While the noncontact power transmission by means of the resonance method can be used to transmit electric power over a relatively long distance as described above, it is important to improve the power transmission efficiency in transmitting electric power.

Regarding the resonance method, a positional displacement (distance) between a resonator (self-resonant coil) on the electric power transmitter side and a resonator (self-resonant coil) on the electric power receiver side influences the transmission efficiency.

In particular, when electric power is to be fed in a noncontact manner by means of the resonance method for the purpose of charging an electrically powered vehicle, the resonator of the power transmitter side (ground side) and the resonator of the power receiver side (vehicle side) are aligned with respect to each other through driver's parking operation. It is therefore sometimes relatively difficult depending on the driver to exactly align respective positions of the resonators, and thus positional displacement should be allowed to some extent.

The present invention has been made to solve such a problem, and an object of the invention is to improve the transmission efficiency in transmitting electric power by means of the resonance method.

### MEANS FOR SOLVING THE PROBLEMS

A coil unit according to the present invention is used for performing at least one of electric power transmission and electric power reception through electromagnetic resonance, and includes a plurality of self-resonant coils with respective coil diameters different from each other for resonating electromagnetically, and a switch configured to select one of the plurality of self-resonant coils.

Preferably, the coil unit further includes an electromagnetic induction coil configured to enable at least one of electric power transmission and electric power reception to and from the plurality of self-resonant coils through electromagnetic induction. The electromagnetic induction coil is provided in common to the plurality of self-resonant coils.

Still preferably, the coil unit further includes a capacitor for adjusting a resonance frequency. The capacitor is provided in common to the plurality of self-resonant coils. The plurality of self-resonant coils when connected to the capacitor have respective resonance frequencies identical to each other.

Preferably, the coil unit further includes a capacitor for adjusting a resonance frequency. The capacitor is provided in common to the plurality of self-resonant coils.

Still preferably, the coil unit further includes a plurality of bobbins on which the plurality of self-resonant coils are mounted respectively. The plurality of bobbins are arranged concentrically. The capacitor is housed in a bobbin of a minimum diameter among the plurality of bobbins.

Preferably, the coil unit further includes a coil case for housing the plurality of self-resonant coils in the coil case.

Preferably, the plurality of self-resonant coils have respective resonance frequencies identical to each other.

A noncontact electric power receiving apparatus according to the present invention includes the coil unit as described above, for receiving electric power through electromagnetic resonance with an electric power transmitting apparatus.

Preferably, the noncontact electric power receiving apparatus further includes a controller for controlling the switch. The controller includes: a distance detection unit configured to detect a distance between the electric power transmitting apparatus and one of the plurality of self-resonant coils; a determination unit configured to determine, based on the distance detected by the distance detection unit, a self-resonant coil used for transmitting electric power among the plurality of self-resonant coils; and a switching control unit configured to control the switch based on a result of determination by the determination unit.

A noncontact electric power feeding system according to the present invention is used for transmitting electric power from a power supply, from the electric power transmitting apparatus to an electric power receiving apparatus through electromagnetic resonance, and the noncontact electric power feeding system includes the electric power transmitting apparatus and the electric power receiving apparatus. The electric power receiving apparatus includes the noncontact electric power receiving apparatus as described above.

A vehicle according to the present invention includes: an electric power receiving apparatus configured to receive, from the electric power transmitting apparatus through electromagnetic resonance, electric power from a power supply external to the vehicle; and an electrical drive apparatus configured to generate driving force for propelling the vehicle from electric power received by the electric power receiving apparatus. The electric power receiving apparatus includes the noncontact electric power receiving apparatus as described above.

Preferably, the noncontact electric power receiving apparatus further includes a controller for controlling the switch. The controller includes a distance detection unit configured to detect a distance between the electric power transmitting apparatus and one of the plurality of self-resonant coils; a determination unit configured to determine, based on the distance detected by the distance detection unit, a self-resonant coil used for transmitting electric power among the plurality of self-resonant coils; and a switching control unit configured to control the switch based on a result of determination by the determination unit.

A noncontact electric power transmitting apparatus according to the present invention includes the coil unit as described above for transmitting electric power through electromagnetic resonance with an electric power receiving apparatus.

Preferably, the noncontact electric power transmitting apparatus further includes a controller for controlling the switch. The controller includes: a distance detection unit configured to detect a distance between the electric power receiving apparatus and one of the plurality of self-resonant coils; a determination unit configured to determine, based on the distance detected by the distance detection unit, a self-resonant coil used for transmitting electric power among the plurality of self-resonant coils; and a switching control unit configured to control the switch based on a result of determination by the determination unit.

A noncontact electric power feeding system according to the present invention is used for transmitting electric power from a power supply, from an electric power transmitting apparatus to an electric power receiving apparatus through electromagnetic resonance, and the noncontact electric power feeding system includes the electric power transmitting apparatus and the electric power receiving apparatus. The electric power transmitting apparatus includes the noncontact electric power transmitting apparatus as described above.

### EFFECTS OF THE INVENTION

The present invention can improve the transmission efficiency in transmitting electric power by means of the resonance method.

### BRIEF DESCRIPTION OF THE DRAWINGS

Fig. 1 is an entire configuration diagram of a vehicle power feeding system according to a first embodiment of the present invention.
Fig. 2 is a diagram for illustrating a principle of electric power transmission by means of the resonance method.
Fig. 3 is a diagram showing a relation between a distance from an electric current source (magnetic current source) and the intensity of an electromagnetic field.
Fig. 4 is a detailed configuration diagram of an electrically powered vehicle 100 shown in Fig. 1.
Fig. 5 is a detailed configuration diagram of a power transmitting apparatus 200 shown in Fig. 1.
Fig. 6 is a diagram showing a relation between a distance between a power receiving apparatus and a power transmitting unit, and a primary voltage.
Fig. 7 is a diagram showing a relation between a distance between a power receiving apparatus and a power transmitting unit, and a secondary voltage.
Fig. 8 is a diagram showing a relation between a distance between a power receiving apparatus and a power transmitting unit, and a primary current.
Fig. 9 is an external view of a power receiving unit 500 in the first embodiment.
Fig. 10 is a diagram illustrating details of connections in power receiving unit 500.
Fig. 11 is a diagram of functional blocks involved in switching control for secondary self-resonant coils in the first embodiment.
Fig. 12 is an example of the map showing a relation between a distance between a power receiving apparatus and a power transmitting unit, and a secondary voltage in the first embodiment.
Fig. 13 is an example of the map showing a relation between a distance between a power receiving apparatus and a power transmitting unit, and a transmission efficiency in the first embodiment.
Fig. 14 is a flowchart for illustrating details of a coil switching control process in the first embodiment.
Fig. 15 is a flowchart for illustrating details of a coil switching control process in the first embodiment.
Fig. 16 is a diagram showing details of connections in a power receiving unit 500 in a modification.
Fig. 17 is an example of the map showing a relation between a distance between a power receiving apparatus and a power transmitting unit, and a secondary voltage in the modification.
Fig. 18 is an example of the map showing a relation between a distance between a power receiving apparatus and a power transmitting unit, and a transmission efficiency in the modification.
Fig. 19 is a flowchart for illustrating details of a coil switching control process in the modification.
Fig. 20 is a flowchart for illustrating details of a coil switching control process in the modification.
Fig. 21 is a detailed configuration diagram of a power transmitting apparatus 200 in a second embodiment.
Fig. 22 is a diagram illustrating details of the inside of a power transmitting unit 220 in the second embodiment.
Fig. 23 is a diagram of functional blocks involved in switching control for secondary self-resonant coils in the second embodiment.
Fig. 24 is an example of the map showing a relation between a distance between a power receiving apparatus and a power transmitting unit, and a secondary voltage in the second embodiment.
Fig. 25 is an example of the map showing a relation between a distance between a power receiving apparatus and a power transmitting unit, and a transmission efficiency in the second embodiment.
Fig. 26 is a flowchart for illustrating details of a coil switching control process in the second embodiment.
Fig. 27 is a flowchart for illustrating details of a coil switching control process in the second embodiment.

### DESCRIPTION OF THE REFERENCE SIGNS

10 vehicle power feeding system; 100 electrically powered vehicle; 110 power receiving apparatus; 112, 113, 115, 340 secondary self-resonant coil; 114, 350 secondary coil; 116, 280 capacitor; 120, 120#, 230 switch; 130, 240 communication unit; 140 rectifier; 142 DC/DC converter; 150 power storage device; 162 voltage step-up converter; 164, 166 inverter; 172, 174 motor generator; 176 engine; 177 power split device; 178 drive wheel; 180 controller; 185 power receiver ECU; 190, 272 voltage sensor; 200 power transmitting apparatus; 210 power supply apparatus; 220 power transmitting unit; 222, 320 primary coil; 224, 225, 330 primary self-resonant coil; 250 AC power supply; 260 high-frequency electric power driver; 270 power transmitter ECU; 274 current sensor; 310 high-frequency power supply; 360 load; 410, 420, 430, 440, 450 bobbin; 500 power receiving unit; 510, 520 coil case; 600, 650 distance detecting unit; 610, 660 memory unit; 620, 670 determination unit; 621, 671 distance detecting coil determination unit; 622 power receiving coil determination unit; 630, 680 switching control unit; 640 power feeding start command unit; 672 power transmitting coil determination unit; 690 power feeding control unit; PL2 positive line; SMR1, SMR2 system main relay; T1, T1#, T1*, T2, T2#, T2*, T3#, T10, T10#, T10*, T20, T20* connection terminal

### BEST MODES FOR CARRYING OUT THE INVENTION

Embodiments of the present invention will be hereinafter described in detail with reference to the drawings. In the drawings, the same or corresponding components are denoted by the same reference characters, and a description thereof will not be repeated.

### First Embodiment

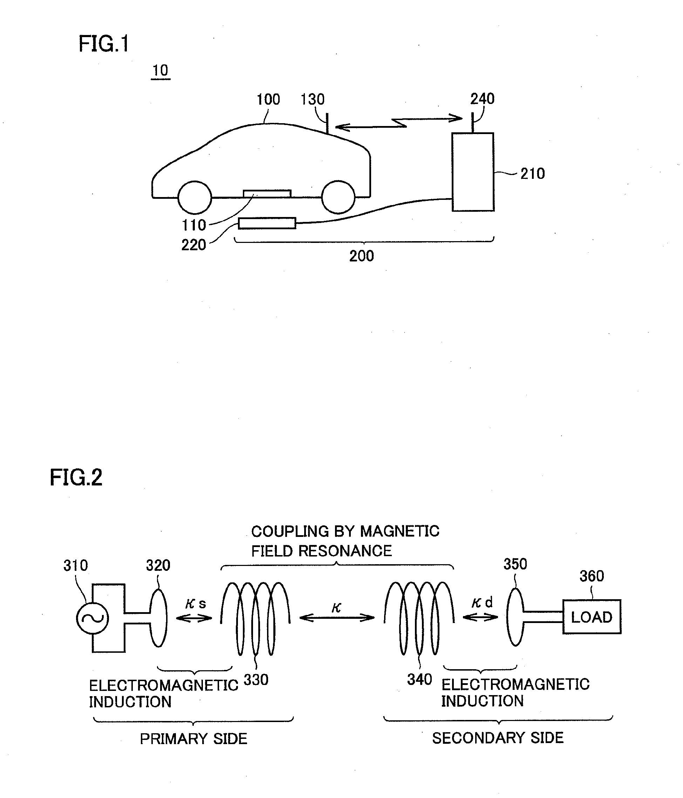

Fig. 1 is an entire configuration diagram of a vehicle power feeding system 10 according to a first embodiment of the present invention. Referring to Fig. 1, vehicle power feeding system 10 includes an electrically powered vehicle 100 and a power transmitting apparatus 200. Electrically powered vehicle 100 includes a power receiving apparatus 110 and a communication unit 130.

Power receiving apparatus 110 is configured to be mounted on the bottom of the vehicle's body and receive electric power in a noncontact manner that is transmitted from a power transmitting unit 220 (described later) of power transmitting apparatus 200. Specifically, power receiving apparatus 110 includes a self-resonant coil (described later) resonating through an electromagnetic field with a self-resonant coil included in power transmitting unit 220 to thereby receive electric power in a noncontact manner from power transmitting unit 220. Communication unit 130 is a communication interface for communication to be performed between electrically powered vehicle 100 and power transmitting apparatus 200.

Power transmitting apparatus 200 includes a power supply apparatus 210, power transmitting unit 220, and a communication unit 240. Power supply apparatus 210 converts commercial AC (alternating current) electric power supplied for example from a system power supply into high-frequency electric power, and outputs the electric power to power transmitting unit 220. The frequency of the high-frequency electric power generated by power supply apparatus 210 is 1 M to tens of MHz for example.

Power transmitting unit 220 is configured to be mounted on the floor of a parking space, and transmit, in a noncontact manner, the high-frequency electric power supplied from power supply apparatus 210 to power receiving apparatus 110 of electrically powered vehicle 100. Specifically, power transmitting unit 220 includes a self-resonant coil (described later) resonating through an electromagnetic field with a self-resonant coil included in power receiving apparatus 110 to thereby transmit electric power in a noncontact manner to power receiving apparatus 110. Communication unit 240 is an interface for communication to be performed between power transmitting apparatus 200 and electrically powered vehicle 100.

In this vehicle power feeding system 10, high-frequency electric power is transmitted from power transmitting unit 220 of power transmitting apparatus 200, and the self-resonant coil included in power receiving apparatus 110 of electrically powered vehicle 100 and the self-resonant coil included in power transmitting unit 220 resonate through an electromagnetic field, and accordingly electric power is fed from power transmitting apparatus 200 to electrically powered vehicle 100.

In the first embodiment, prior to practical and regular electric power feeding, a pre-feeding of electric power is performed from power transmitting unit 220 to power receiving apparatus 110 and, based on electric power feeding conditions, the distance between power transmitting unit 220 and power receiving apparatus 110 is detected. Based on the information about the distance, control is performed so that a switch is made between a plurality of self-resonant coils included in power receiving apparatus 110, as described later.

The magnitude of the electric power transmitted from power transmitting unit 220 when the distance is to be detected as described above, is set smaller than that of electric power supplied from power transmitting unit 220 to power receiving apparatus 110 after switching between self-resonant coils included in power receiving apparatus 110.

A description will now be given of a noncontact power feeding method used for vehicle power feeding system 10 according to the first embodiment. In vehicle power feeding system 10 of the first embodiment, the resonance method is used to feed electric power from power transmitting apparatus 200 to electrically powered vehicle 100.

Fig. 2 is a diagram for illustrating a principle of electric power transmission by means of the resonance method. Referring to Fig. 2, according to this resonance method, two LC resonant coils having the same natural frequency resonate in an electromagnetic field (near field) like two resonating tuning forks, and accordingly electric power is transmitted through the electromagnetic field from one coil to the other coil.

Specifically, a primary coil 320 that is an electromagnetic induction coil is connected to a high-frequency power supply 310, and high-frequency electric power of 1 M to tens of MHz is fed to a primary self-resonant coil 330 magnetically coupled to primary coil 320 by electromagnetic induction. Primary self-resonant coil 330 is an LC resonator having its own inductance and stray capacitance, and resonates with a secondary self-resonant coil 340 having the same resonance frequency as primary self-resonant coil 330 through an electromagnetic field (near field). Then, energy (electric power) is transferred from primary self-resonant coil 330 to secondary self-resonant coil 340 through the electromagnetic field. The energy (electric power) transferred to secondary self-resonant coil 340 is picked up by a secondary coil 350 that is an electromagnetic induction coil magnetically coupled to secondary self-resonant coil 340 by electromagnetic induction, and supplied to a load 360. Electric power transmission by means of the resonance method is accomplished when a Q factor representing the intensity of resonance of primary self-resonant coil 330 and secondary self-resonant coil 340 is larger than for example 100.

As to the correspondence to Fig. 1, secondary self-resonant coil 340 and secondary coil 350 correspond to power receiving apparatus 110 of Fig. 1, and primary coil 320 and primary self-resonant coil 330 correspond to power transmitting unit 220 of Fig. 1.

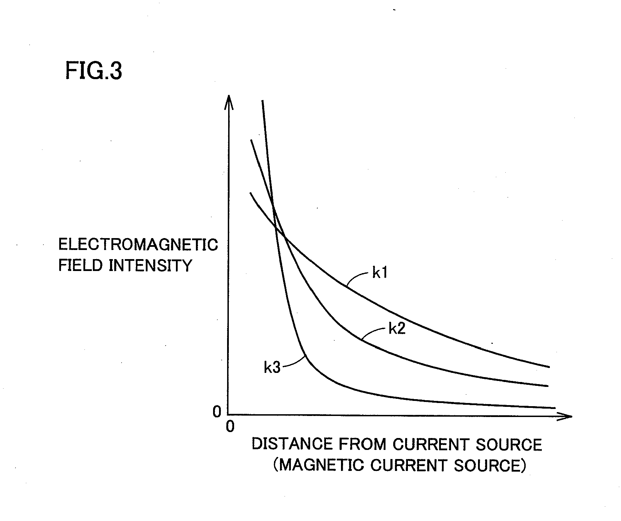

Fig. 3 is a diagram showing a relation between a distance from an electric current source (magnetic current source) and the intensity of an electromagnetic field. Referring to Fig. 3, the electromagnetic field includes three components. Curve k1 represents a component inversely proportional to a distance from a wave source, and is referred to as "radiation electromagnetic field". Curve k2 represents a component inversely proportional to the square of a distance from the wave source, and is referred to as "induction electromagnetic field". Curve k3 represents a component inversely proportional to the cube of a distance from the wave source, and is referred to as "static electromagnetic field".

Here, there is a region where the intensity of the electromagnetic wave sharply decreases with respect to the distance from the wave source. The resonance method uses this near field (evanescent field) to transfer energy (electric power). More specifically, the near field is used to cause a pair of resonators (for example a pair ofLC resonant coils) having the same natural frequency to resonate and thereby transfer energy (electric power) from one resonator (primary self-resonant coil) to the other resonator (secondary self-resonant coil). This near field does not propagate energy (electric power) to a distant location. Therefore, as compared with an electromagnetic wave transferring energy (electric power) by "radiation electromagnetic field" propagating energy to a distant location, the resonance method can transmit electric power with a smaller energy loss.

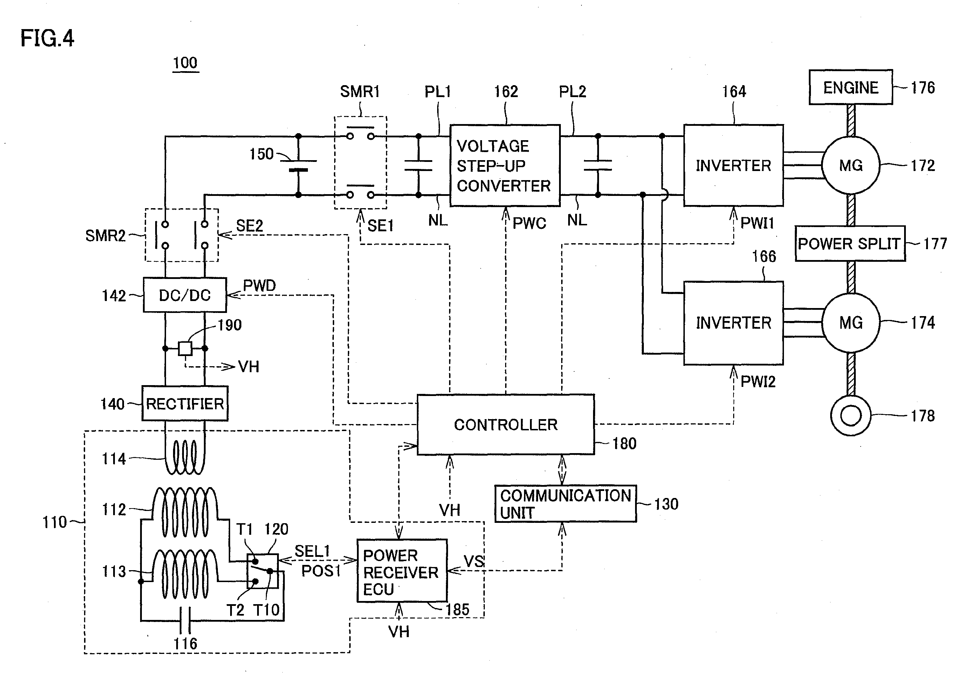

Fig. 4 is a detailed configuration diagram of electrically powered vehicle 100 shown in Fig. 1. Referring to Fig. 4, electrically powered vehicle 100 includes a power storage device 150, a system main relay SMR1, a voltage step-up converter 162, inverters 164, 166, motor generators 172, 174, an engine 176, a power split device 177, and a drive wheel 178. Electrically powered vehicle 100 also includes power receiving apparatus 110, a rectifier 140, a DC/DC converter 142, a system main relay SMR2, and a voltage sensor 190. Further, electrically powered vehicle 100 includes a controller 180 and communication unit 130. Power receiving apparatus 110 includes secondary self-resonant coils 112, 113, a secondary coil 114, a capacitor 116, a switch 120, and a power receiver ECU (Electronic Control Unit) 185.

While electrically powered vehicle 100 in the first embodiment is described as a hybrid vehicle including engine 176, the present embodiment is not limited to this configuration. The embodiment is also applicable to any vehicle such as electric vehicle and fuel cell vehicle as long as the vehicle is driven by an electric motor. In this case, engine 176 is not included in the configuration.

This electrically powered vehicle 100 is mounted with engine 176 and motor generator 174 each used as a source of motive power. Engine 176 and motor generators 172, 174 are coupled to power split device 177. Electrically powered vehicle 100 travels using the driving force generated by at least one of engine 176 and motor generator 174. The motive power generated by engine 176 is split into two components by power split device 177. Specifically, one is transmitted through a path leading to drive wheel 178 and the other is transmitted through a path leading to motor generator 172.

Motor generator 172 is an AC rotating electric machine and is specifically a three-phase AC synchronous electric motor for example having permanent magnets embedded in a rotor. Motor generator 172 generates electric power using kinetic energy of engine 176 that has been split by power split device 177. For example, when the charging status (also referred to as "SOC (State Of Charge)") of power storage device 150 becomes lower than a predetermined value, engine 176 starts and motor generator 172 generates electric power. Thus, power storage device 150 is charged.

Motor generator 174 is also an AC rotating electric machine. Like motor generator 172, motor generator 174 is for example a three-phase AC synchronous electric motor having permanent magnets embedded in a rotor. Motor generator 174 uses at least one of the electric power stored in power storage device 150 and the electric power generated by motor generator 172 to generate driving force. The driving force of motor generator 174 is transmitted to drive wheel 178.

When the vehicle's brake is applied or when acceleration is slowed down while the vehicle is traveling downhill, the kinetic energy or the mechanical energy stored in the vehicle in the form of potential energy is used through drive wheel 178 for rotationally driving motor generator 174, and accordingly motor generator 174 operates as an electric generator. Motor generator 174 thus operates as a regenerative brake converting the traveling energy into electric power and generating braking force. The electric power generated by motor generator 174 is stored in power storage device 150.

Power split device 177 is formed of a planetary gear train including a sun gear, a pinion gear, a carrier, and a ring gear. The pinion gear engages with the sun gear and the ring gear. The carrier supports the pinion gear so that the pinion gear can rotate about its axis, and is coupled to a crankshaft of engine 176. The sun gear is coupled to a rotational shaft of motor generator 172. The ring gear is coupled to a rotational shaft of motor generator 174 and drive wheel 178.

Power storage device 150 is a rechargeable DC power supply and is formed of a secondary battery such as lithium-ion battery or nickel-metal hydride battery, for example. Power storage device 150 stores electric power supplied from DC/DC converter 142 and also stores regenerative electric power generated by motor generators 172, 174. Power storage device 150 supplies the stored electric power to voltage step-up converter 162. As power storage device 150, a capacitor of large capacitance may be employed. The power storage device may be any as long as the power storage device is an electric power buffer capable of temporarily storing the electric power supplied from power transmitting apparatus 200 (Fig. 1) and the regenerative electric power from motor generators 172, 174 and supplying the stored electric power to voltage-step-up converter 162.

System main relay SMR1 is provided between power storage device 150 and voltage step-up converter 162. When signal SE1 from controller 180 is activated, system main relay SMR1 electrically connects power storage device 150 and voltage step-up converter 162. When signal SE1 is deactivated, system main relay SMR1 breaks the electrical path between power storage device 150 and voltage step-up converter 162. Based on signal PWC from controller 180, voltage step-up converter 162 steps up a voltage so that the voltage on a positive line PL2 is equal to or larger than the voltage that is output from power storage device 150. Voltage step-up converter 162 is formed of a DC chopper circuit for example. Inverters 164, 166 are provided in association with motor generators 172, 174, respectively. Inverter 164 drives motor generator 172 based on signal PWI1 from controller 180, while inverter 166 drives motor generator 174 based on signal PWI2 from controller 180. Inverters 164, 166 are each configured to include a three-phase bridge circuit for example.

Secondary self-resonant coils 112, 113 have the same resonance frequency and have respective coil diameters different from each other as described later. One end of secondary self-resonant coil 112 and one end of secondary self-resonant coil 113 are connected to each other, and respective other ends are connected to connection ends T1 and T2 of switch 120, respectively.

One end of capacitor 116 is connected to a connection node of secondary self-resonant coils 112, 113, and the other end thereof is connected to a connection end T10 of switch 120.

Following switch command SEL1 from power receiver ECU 185, switch 120 makes a switch so that the connection end to which capacitor 116 is connected is connected to the connection end for one of secondary self-resonant coils 112, 113. At this time, switch 120 outputs to power receiver ECU 185 signal POS1 representing which of the secondary self-resonant coils the capacitor is connected to.

As seen from above, when secondary self-resonant coil 112, 113 is connected by switch 120 to capacitor 116, the connected secondary self-resonant coil is an LC resonant coil with its two ends connected to capacitor 116. The LC resonant coil resonates with a primary self-resonant coil (described later) of power transmitting apparatus 200 through an electromagnetic field, and accordingly receives electric power from power transmitting apparatus 200.

In the case where the capacitance component for obtaining a predetermined resonance frequency can be implemented by the stray capacitance of secondary self-resonant coil 112, 113 itself, above-described capacitor 116 is not disposed and the two ends of secondary self resonant coil 112, 113 are non-connected (opened). In this case, the secondary self-resonant coils are switched as follows. At a substantially central portion of secondary self-resonant coils 112, 113 each, a relay (not shown) capable of separating the coil is provided. For a secondary self-resonant coil to be used, the contacts of the relay are closed. For another secondary self-resonant coil that is not to be used, the contacts of the relay are opened. In this way, the impedance of the secondary self-resonant coil that is not used is changed to surely prevent electromagnetic resonance with a primary self-resonant coil 224.

The number of turns of these secondary self-resonant coils 112, 113 each is appropriately set based on factors such as the distance between the secondary self-resonant coil and the primary self-resonant coil of power transmitting apparatus 200 and the resonance frequency of the primary self-resonant coil and secondary self-resonant coils 112, 113, so that a Q factor representing the intensity of resonance of the primary self-resonant coil and secondary self-resonant coils 112, 113 each (Q > 100 for example) and κ representing the degree of coupling of the coils for example are large.

Secondary coil 114 is disposed coaxially with secondary self-resonant coils 112, 113 and can be magnetically coupled to secondary self-resonant coils 112, 113 through electromagnetic induction. Secondary coil 114 picks up, through electromagnetic induction, the electric power received by secondary self-resonant coils 112, 113, and outputs the electric power to rectifier 140.

Rectifier 140 rectifies the AC electric power picked up by secondary coil 114. DC/DC converter 142 converts the electric power rectified by rectifier 140 into a voltage level of power storage device 150 based on signal PWD from controller 180, and outputs the resultant electric power to power storage device 150. System main relay SMR2 is provided between DC/DC converter 142 and power storage device 150. When signal SE2 from controller 180 is activated, system main relay SMR2 electrically connects power storage device 150 to DC/DC converter 142. When signal SE2 is deactivated, system main relay SMR2 breaks the electrical path between power storage device 150 and DC/DC converter 142. Voltage sensor 190 detects voltage VH between rectifier 140 and DC/DC converter 142, and outputs the detected value to controller 180 and power receiver ECU 185.

Based on the degree to which the accelerator is pressed down, the vehicle's speed and signals from various sensors, controller 180 generates signals PWC, PWI1, PWI2 for driving voltage step-up converter 162 and motor generators 172, 174 respectively, and outputs generated signals PWC, PWI1, PWI2 to voltage step-up converter 162 and inverters 164, 166 respectively. While the vehicle is traveling, controller 180 activates signal SE1 to turn on system main relay SMR1 and deactivates signal SE2 to turn off system main relay SMR2.

Controller 180 receives, from power transmitting apparatus 200 via communication unit 130, information (voltage and current) about electric power transmitted from power transmitting apparatus 200, and receives from voltage sensor 190 the detected value of voltage VH detected by voltage sensor 190. Based on the data as described above, controller 180 controls parking for example of the vehicle so that the vehicle is guided toward power transmitting unit 220 of power transmitting apparatus 200 (Fig. 1).

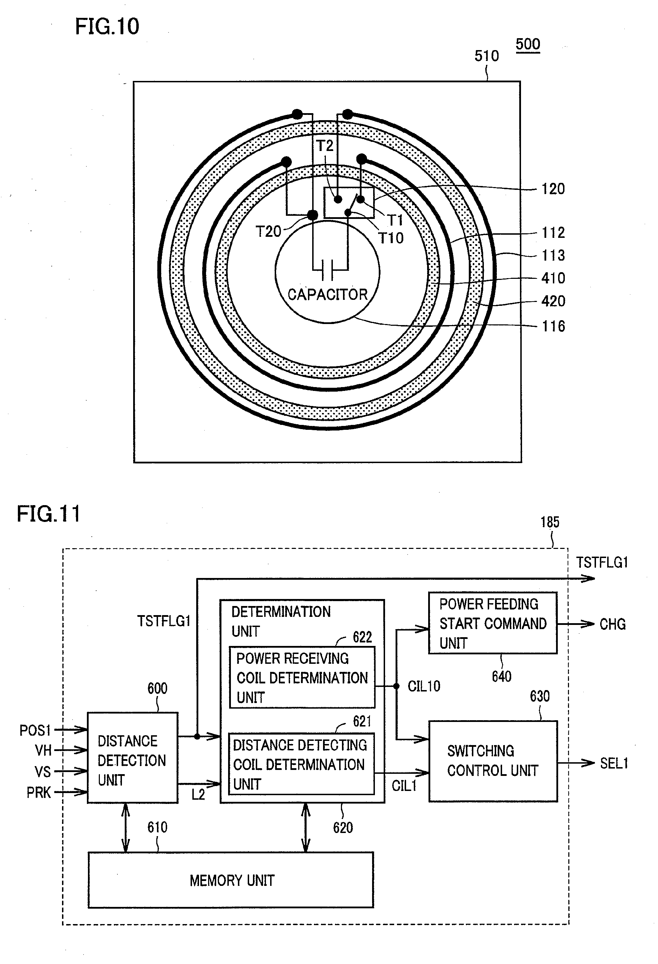

Power receiver ECU 185 receives, from power transmitting apparatus 200 via communication unit 130, information (voltage and current for example) about electric power transmitted from power transmitting apparatus 200, and receives from voltage sensor 190 the detected value of voltage VH detected by voltage sensor 190. Based on the information as described above, power receiver ECU 185 detects the distance between power receiving apparatus 110 and power transmitting unit 220 (Fig. 1). Based on the detected distance between power receiving apparatus 110 and power transmitting unit 220 (Fig. 1), power receiver ECU 185 controls switch 120 so that one of secondary self-resonant coils 112, 113 is selected. Switching control for the coils will be described later using Fig. 11.

When parking of the vehicle above power transmitting unit 220 is completed and the secondary self-resonant coil to be used for receiving electric power is selected, controller 180 transmits a power feeding command to power transmitting apparatus 200 via communication unit 130, and activates signal SE2 to turn on system main relay SMR2. Then, controller 180 generates signal PWD for driving DC/DC converter 142, and outputs the generated signal PWD to DC/DC converter 142.

Controller 1.80 and power receiver ECU 185 each include a CPU (Central Processing Unit), a memory device and an input/output buffer (not shown), receive signals of sensors and output control commands to constituent devices and control electrically powered vehicle 100 and the devices. The control of these components is not limited to processing by means of software. The control may be partially performed using dedicated hardware (electronic circuit).

While Fig. 4 shows the configuration where controller 180 and power receiver ECU 185 are separate controllers, controller 180 and power receiver ECU 185 are not limited to such a configuration, and may be integrated into one controller. Further, a part of the functions of controller 180 may be performed by another controller.

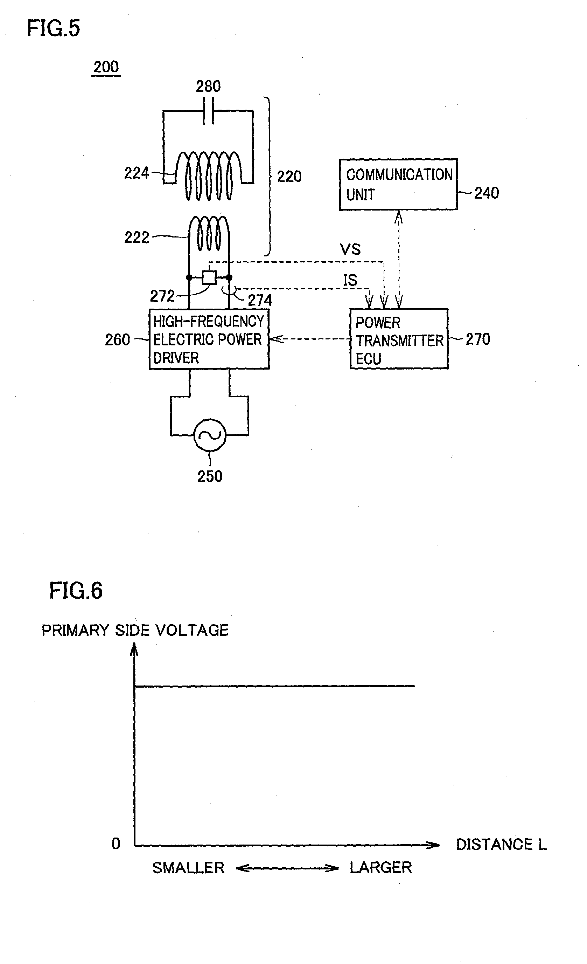

Fig. 5 is a detailed configuration diagram of power transmitting apparatus 200 shown in Fig. 1. Referring to Fig. 5, power transmitting apparatus 200 includes an AC power supply 250, a high-frequency electric power driver 260, a primary coil 222, a primary self-resonant coil 224, a voltage sensor 272, a current sensor 274, a communication unit 240, a power transmitter ECU 270, and a capacitor 280.

AC power supply 250 is a power supply located externally to the vehicle, and is a commercial power supply for example. High-frequency electric power driver 260 converts electric power received from AC power supply 250 into high-frequency electric power, and supplies the resultant high-frequency electric power to primary coil 222. The frequency of the high-frequency electric power generated by high-frequency electric power driver 260 is 1 M to tens of MHz for example.

Primary coil 222 is disposed coaxially with primary self-resonant coil 224, and can be magnetically coupled to primary self-resonant coil 224 through electromagnetic induction. The high-frequency electric power supplied from high-frequency electric power driver 260 is fed from primary coil 222 to primary self-resonant coil 224 through electromagnetic induction.

Primary self-resonant coil 224 has its two ends connected to capacitor 280 to form an LC resonant coil. Primary self-resonant coil 224 resonates with secondary self-resonant coils 112, 113 of electrically powered vehicle 100 through an electromagnetic field, and accordingly transmits electric power to electrically powered vehicle 100. In the case where the capacitance component for obtaining a predetermined resonance frequency can be implemented by the stray capacitance of primary self-resonant coil 224 itself, capacitor 280 is not disposed and the two ends of primary self-resonant coil 224 are non-connected (opened).

The number of turns of this primary self-resonant coil 224 is also appropriately set based on factors such as the distance between the primary self-resonant coil and secondary self-resonant coils 112, 113 of electrically powered vehicle 100 and the resonance frequency of primary self-resonant coil 224 and secondary self-resonant coils 112, 113, so that a Q factor (Q > 100 for example) and degree of coupling κ for example are large.

Primary self-resonant coil 224 and primary coil 222 are constituent components of power transmitting unit 220 shown in Fig. 1. Voltage sensor 272 detects voltage VS that is output from high-frequency electric power driver 260, and outputs the detected value to power transmitter ECU 270. Current sensor 274 detects current IS that is output from high-frequency electric power driver 260, and outputs the detected value to power transmitter ECU 270.

Receiving an activation command from electrically powered vehicle 100 via communication unit 240, power transmitter ECU 270 activates power transmitting apparatus 200. Receiving a power feeding start command from electrically powered vehicle 100 via communication unit 240, power transmitter ECU 270 controls the output of high-frequency electric power driver 260 so that the electric power supplied from power transmitting apparatus 200 to electrically powered vehicle 100 is substantially equal to a target value.

When power transmitter ECU 270 receives, from electrically powered vehicle 100 via communication unit 240, a test signal output command for detecting the distance between power receiving apparatus 110 (Fig. 1) and power transmitting unit 220, power transmitter ECU 270 transmits, to electrically powered vehicle 100 via communication unit 240, information about electric power of power transmitting apparatus 200 including voltage VS from voltage sensor 272 and current IS from current sensor 274. While power transmitter ECU 270 is receiving the test signal output command, power transmitter ECU 270 controls the output of high-frequency electric power driver 260 so that predetermined electric power is output that is smaller than the electric power supplied during execution of power feeding based on the power feeding start command.

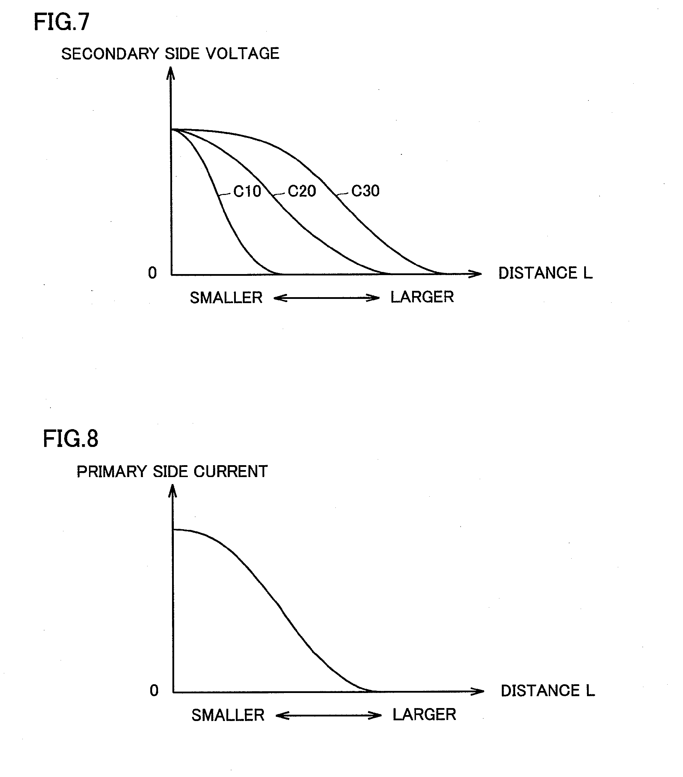

A general description will now be given using Figs. 6 and 7 regarding detection of the distance between power receiving apparatus 110 and power transmitting unit 220.

Fig. 6 is a diagram showing a relation between a distance between power receiving apparatus 110 and power transmitting unit 220 and a primary voltage (voltage output from power transmitting apparatus 200).

Fig. 7 is a diagram showing a relation between a distance between power receiving apparatus 110 and power transmitting unit 220 and a secondary voltage (voltage received by electrically powered vehicle 100).

The secondary voltage received by electrically powered vehicle 100 changes with distance L between power transmitting unit 220 of power transmitting apparatus 200 and power receiving apparatus 110 of electrically powered vehicle 100 as shown in Fig. 7, in contrast to the primary voltage that is constant as shown in Fig. 6. Then, the relation between the primary voltage and the secondary voltage as shown in Figs. 6 and 7, which is obtained using primary self-resonant coil 224 of power transmitting unit 220, is measured through experiments or the like in advance, plotted on a map or the like, and stored. Based on the detected value of voltage VH representing the secondary voltage, reference can be made to this map to detect the distance between power transmitting unit 220 and power receiving apparatus 110. Information about primary self-resonant coil 224 is included in the electric power information transmitted from power transmitter ECU 270 to electrically powered vehicle 100 via communication unit 240 as described above.

Here, the secondary voltage received by electrically powered vehicle 100 varies as the diameter of the secondary self-resonant coil increases like C 10, C20 and C30 for example in Fig. 7. In this example, the diameter of the secondary self-resonant coil corresponding to C10 is the smallest one and that corresponding to C30 is the largest one.

Specifically, as the diameter of the secondary self-resonant coil is larger, a longer distance can be detected while the precision is lower for shorter distances. In contrast, as the coil diameter is smaller, the distance that can be detected, or detectable distance, is shorter while the precision for shorter distances is higher.

Therefore, for detecting the distance between power receiving apparatus 110 and power transmitting unit 220, a plurality of secondary self-resonant coils with respective diameters different from each other may be provided and a switch can be made between these coils so that the distance can be precisely detected including distances from longer ones to shorter ones.

It is noted that the primary current (current output from power transmitting apparatus 200) changes with distance L between power transmitting unit 220 and power receiving apparatus 110 as shown in Fig. 8. Therefore, this relation may be used to detect the distance between power transmitting unit 220 and power receiving apparatus 110 based on the detected value of the current output from power transmitting apparatus 200.

According to the foregoing description of distance detection, a plurality of secondary self-resonant coils with different diameters is provided and a switch is made between these coils. Alternatively, a switch may be made between a plurality of secondary self-resonant coils with different features other than the coil diameter (including for example the shape of the coil and the gap in the vertical direction between the secondary self-resonant coil and the primary self-resonant coil).

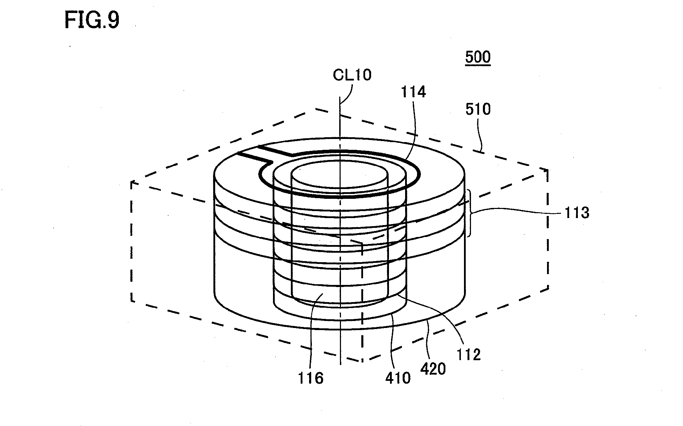

Fig. 9 shows an external view of a power receiving unit 500 for illustrating general arrangement of secondary self-resonant coils 112, 113 and secondary coil 114 included in power receiving apparatus 110 in the first embodiment.

Referring to Fig. 9, power receiving unit 500 includes secondary self-resonant coils 112, 113, secondary coil 114, capacitor 116, bobbins 410, 420, and a coil case 510.

Bobbins 410, 420 are cylindrical insulators having respective diameters different from each other. The diameter of bobbin 410 is smaller than that of bobbin 420, and they are arranged concentrically in coil case 510.

Secondary self-resonant coils 112, 113 have respective resonance frequencies identical to each other. Secondary self-resonant coils 112, 113 are wound around and accordingly mounted on bobbins 410, 420, respectively. Because respective resonance frequencies of the secondary self-resonant coils are identical to each other, electromagnetic resonance can be caused using any of the secondary self-resonant coils, without changing primary self-resonant coil 224 of power transmitting unit 220. Respective resonance frequencies of the secondary self-resonant coils may not necessarily be exactly identical, and may be slightly different from each other as long as electromagnetic resonance with the power transmitting unit is possible.

Capacitor 116 is provided within bobbin 410 having the minimum diameter. One capacitor 116 is provided per power receiving unit 500, and provided commonly to secondary self-resonant coils 112, 113. Switch 120 (Fig. 4) makes a switch to connect the capacitor to the two ends of secondary self-resonant coil 112 or secondary self-resonant coil 113 to thus configure an LC resonance circuit.

Secondary coil 114 is provided coaxially with minimum-diameter bobbin 410. Secondary coil 114 is provided commonly to secondary self-resonant coils 112, 113. The two ends of the secondary coil are drawn to the outside of coil case 510 and connected to rectifier 140 (Fig. 4).

Coil case 510 is box-shaped, for example, and houses secondary self-resonant coils 112, 113, secondary coil 114, capacitor 116, and bobbins 410, 420. For the purpose of preventing electromagnetic field leakage, an electromagnetic shield (not shown) is provided on the faces of coil case 510 except for the one thereof opposite to power transmitting unit 220. The electromagnetic shield is a low-impedance material, and copper foil for example is used for the shield. The shape of coil case 510 is not limited to the rectangular parallelepiped as shown in Fig. 9 as long as the coil case can house secondary self-resonant coils 112, 113, secondary coil 114, capacitor 116, and bobbins 410, 420. Other examples of the shape of coil case 510 include cylindrical shape, tubular shape having a polygonal cross section, and the like.

As seen from above, two secondary self-resonant coils 112, 113 are concentrically arranged, and capacitor 116, secondary coil 114 and coil case 510 are provided commonly to the secondary self-resonant coils. Thus, even when a plurality of secondary self-resonant coils is provided, the physical size as well as the cost of power receiving unit 500 can be reduced

Next, Fig. 10 will be used to describe details of connections in power receiving unit 500. Fig. 10 is a cross section perpendicular to a central axis CL10 of power receiving unit 500 shown in Fig. 9.

Referring to Fig. 10, one end of secondary self-resonant coil 112 and one end of secondary self-resonant coil 113 are both connected to one end T20 of capacitor 116. Respective other ends of secondary self-resonant coils 112, 113 are connected to connection terminals T 1 and T2 of switch 120, respectively.

The other end of capacitor 116 is connected to connection terminal T10 of switch 120. Switch 120 makes a switch so that connection terminal T10 is connected to connection terminal T 1 or T2.

Regarding the resonance method, a positional displacement (distance) between the primary self-resonant coil on the electric power transmitter side and the secondary self-resonant coil on the electric power receiver side influences the transmission efficiency. Specifically, as the distance between the primary self-resonant coil and the secondary self-resonant coil is shorter, the transmission efficiency is higher.

In the case where electric power is fed in a noncontact manner by means of the resonance method for the purpose of charging an electrically powered vehicle, a resonator on the electric power transmitter (ground) side and a self-resonant coil on the electric power receiver (vehicle) side are aligned through parking operation of the vehicle's driver. It is therefore relatively difficult in some cases, depending on the driver, to exactly align respective positions of the transmitter-side resonator and the receiver-side resonator with respect to each other. It is thus required to allow positional displacement to some extent.

In order for the resonance method to be able to transmit electric power even when a positional displacement between the primary self-resonant coil and the secondary self-resonant coil is large, it is necessary to use a self-resonant coil with which electric power can be transmitted to an extent as broad as possible (coil of a large diameter for example). A coil with which electric power can be transmitted to a broader extent, however, has relatively lower electric power transfer performance and therefore the transmission efficiency is low. In contrast, it is supposed that a high-efficiency coil having high electric power transfer performance (coil of a small diameter for example) is used as a self-resonant coil. In this case, if a positional displacement between the primary self-resonant coil and the secondary self-resonant coil is small, the transmission efficiency is high. However, because the extent to which electric power can be transferred with this coil is small, the transmission efficiency is lower than such a coil with which electric power can be transferred to a broader extent, if a positional displacement between the primary and secondary self-resonant coils is large.

In the first embodiment, therefore, switching control is performed in a manner that secondary self-resonant coils are switched so that a positional displacement (distance) between the primary self-resonant coil and the secondary self-resonant coil is precisely detected and electric power is transferred efficiently based on the detected distance.

Fig. 11 shows a diagram of functional blocks involved in switching control for secondary self-resonant coils that is performed by power receiver ECU 185 in the first embodiment. The functional blocks shown in Fig. 11 are each implemented through processing by power receiver ECU 185 in a hardware or software manner.

Referring to Fig. 11, power receiver ECU 185 includes a distance detection unit 600, a memory unit 610, a determination unit 620, a switching control unit 630, and a power feeding start command unit 640. Determination unit 620 includes a distance detecting coil determination unit 621 and a power receiving coil determination unit 622.

Distance detection unit 600 receives, as inputs, power receiver voltage (secondary voltage) VH provided from voltage sensor 190, signal PRK provided from controller 180 for indicating completion of parking of electrically powered vehicle 100, and signal POS 1 provided from switch 120 for indicating a current switch position. Distance detection unit 600 also receives via communication unit 130, as an input, primary voltage VS of a test signal transmitted from power transmitting apparatus 200 for detecting the distance.

Distance detection unit 600 detects from signal PRK the fact that parking of electrically powered vehicle 100 is completed, and then distance detection unit 600 outputs to power transmitting apparatus 200 via communication unit 130, test signal output command TSTFLG1 that is rendered ON. While test signal output command TSTFLG1 is ON, power transmitting apparatus 200 outputs predetermined electric power smaller than the electric power that is supplied during execution of power feeding based on the power feeding start command, as described above. Distance detection unit 600 also outputs to determination unit 620, test signal output command TSTFLG1 so that a test signal for detecting the distance is output.

Distance detection unit 600 detects distance L between power transmitting unit 220 and power receiving apparatus 110 based on primary voltage VS of the test signal output from power transmitting apparatus 200, secondary voltage VH detected by voltage sensor 190, and switch position POS1 of switch 120. Detected distance L is output to determination unit 620. When detected distance L is finally confirmed, test signal output command TSTFLG1 is rendered OFF.

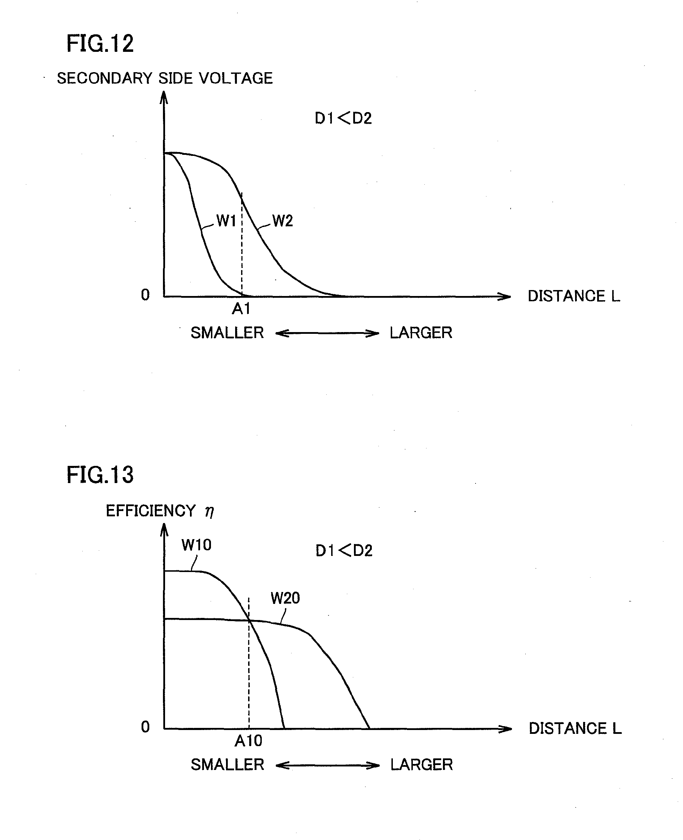

As for a specific way to detect the distance, distance detection unit 600 detects distance L according to a map stored in advance in storage unit 610 as shown in Fig. 12.

Fig. 12 is an example of the map stored in memory unit 610 for use in detection of the distance as described above, with respect to a certain primary voltage. In Fig. 12, curve W1 represents a secondary voltage detected by using secondary self-resonant coil 112 having a smaller diameter (hereinafter also referred to as "first coil"), and curve W2 represents a secondary voltage detected by using secondary self-resonant coil 113 having a larger diameter (hereinafter also referred to as "second coil").

As described above with reference to Fig. 7, depending on the diameter of the secondary self-resonant coil used for receiving electric power, the detectable distance and the precision of the detected distance vary. Therefore, distance detection unit 600 first uses the second coil with which a longer distance can be detected and detects distance L. Then, when detected distance L is a distance detectable by using the first coil, switching control unit 630 switches the secondary self-resonant coil, which is used for detecting the distance, to the first coil, and the first coil with higher precision is used to detect distance L again as described later.

Referring to Fig. 11 again, determination unit 620 receives detected distance L and test signal output command TSTFLG1 as inputs from distance detection unit 600.

While the distance is detected (namely test signal output command TSTFLG1 is ON), distance detecting coil determination unit 621 determines, depending on whether detected distance L is smaller than a predetermined threshold or not, which of respective detected distance values detected by using the first and second coils is to be used.

Specifically, distance detecting coil determination unit 621 refers to the map stored in memory unit 610 and shown in Fig. 12. In the case where distance L detected by the second coil is A1 or more, distance detecting coil determination unit 621 determines that the distance detected by the second coil is to be used and, in the case where this distance L is smaller than A1, determination unit 621 determines that the distance detected by the first coil is to be used. Then, distance detecting coil determination unit 621 outputs to switching control unit 630 coil determination signal CIL 1 representing the result of determination.

When detected distance L is confirmed (namely test signal output command TSTFLG1 is OFF), power receiving coil determination unit 622 determines, based on distance L between power transmitting unit 220 and power receiving apparatus 110, which of the first and second coils is to be used for receiving electric power.

Specifically, power receiving coil determination unit 622 refers to a map showing a relation between distance L and electric power transmission efficiency η that is stored in memory unit 610 and shown in Fig. 13, and selects a coil providing higher transmission efficiency η for detected distance L. In Fig. 13, curve W10 represents the transmission efficiency of the first coil, and curve W20 represents the transmission efficiency of the second coil. As shown in Fig. 13, as the coil diameter is smaller, the transmission efficiency is relatively higher while the distance over which electric power can be fed is shorter. In contrast, as the coil diameter is larger, the transmission efficiency is relatively lower while the distance over which electric power can be fed is longer. In the case where detected distance L is smaller than the distance for which the transmission efficiency of the second coil is higher than that of the first coil (distance A10 in Fig. 13 for example), power receiving coil determination unit 622 determines that the first coil is to be selected and, when detected distance L is A10 or more, the determination unit determines that the second coil is to be selected. Then, power receiving coil determination unit 622 outputs coil determination signal CIL10 representing the result of determination to switching control unit 630 and power feeding start command unit 640.

Referring again to Fig. 11, when the distance is to be detected, switching control unit 630 outputs coil switch command SEL1 to switch 120, based on coil determination signal CIL1 that is input from determination unit 620. When the electric power is to be received, switching control unit 630 outputs coil switch command SEL1 to switch 120, based on coil determination signal CIL10 that is input from determination unit 620.

Following switch signal SEL1, switch 120 switches the coil used for detecting the distance and switches the coil used for receiving electric power.

Further, power feeding start command unit 640 receives coil determination signal CIL10 representing the coil used for receiving electric power, from determination unit 620 as an input. When coil determination signal CIL 10 is set, power feeding start command unit 640 outputs power feeding start signal CHG to power transmitting apparatus 200 via communication unit 130.

In the description above, the threshold based on which the determination as to switching of coils is made for detecting the distance (threshold A1 in Fig. 12), and the threshold based on which the determination as to switching of coils is made for receiving electric power (threshold A10 in Fig. 13) may be set to the same value. In this case, in the process for determining a coil to be used for receiving electric power that is performed by power receiving coil determination unit 622 of determination unit 620, signal CIL10 = CIL1 may be used so that the coil finally used for detecting the distance is directly used for receiving electric power, and electric power feeding is started.

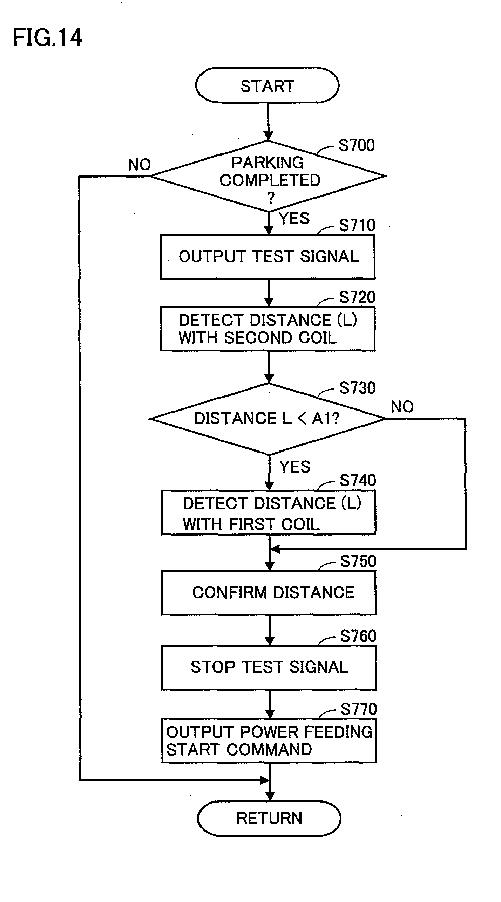

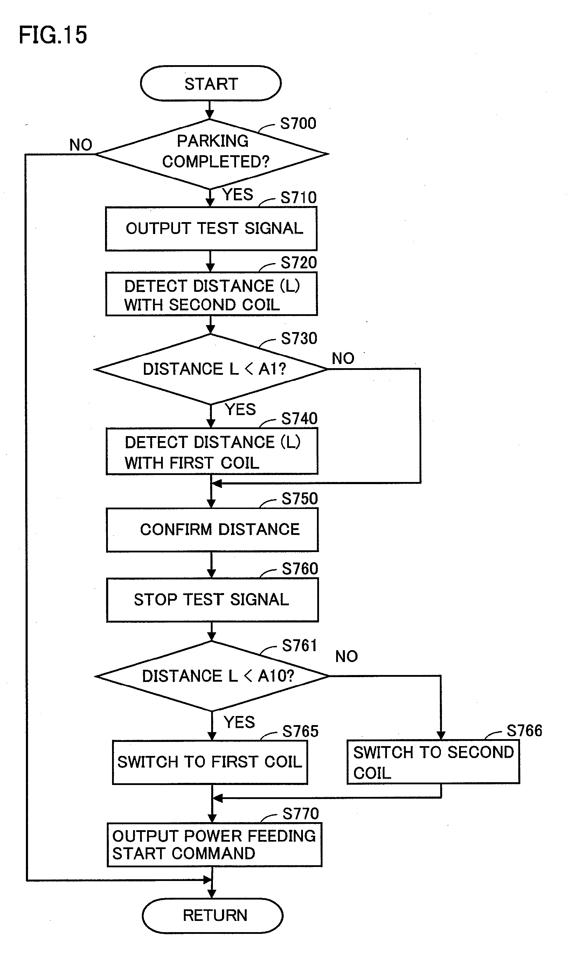

Figs. 14 and 15 each show a flowchart for illustrating details of a coil switching control process followed by power receiver ECU 185. In the flowchart shown in Fig. 14 as well as respective flowcharts shown in Figs. 15, 19 and 20 described later, a program stored in advance in power receiver ECU 185 is called from a main routine and executed in predetermined cycles. Alternatively, for some of the steps, dedicated hardware (electronic circuit) may be configured to execute the process.

In connection with Fig. 14, a description will be given of the case where a threshold used for determining a coil to be used in detecting the distance (threshold A1 in Fig. 12) and a threshold used for determining a coil to be used in receiving electric power (threshold A10 in Fig. 13) are identical, namely A1= A10.

Referring to Figs. 4, 11 and 14, power receiver ECU 185 determines in step (hereinafter step is abbreviated as S) 700 whether or not parking of electrically powered vehicle 100 is completed, based on signal PRK representing the fact that parking of electrically powered vehicle 100 is completed.

When parking of electrically powered vehicle 100 is not completed (NO in S700), the process returns to the main routine without execution of this switching control.

When parking of electrically powered vehicle 100 is completed (YES in S700), the process proceeds to S710 in which power receiver ECU 185 outputs to power transmitting apparatus 200 (Fig. 1) test signal output command TSTFLG1 which is rendered ON for detecting the distance.

Next, in S720, power receiver ECU 185 selects the second coil with which a longer distance can be detected, and detects distance L between power receiving apparatus 110 and power transmitting unit 220 (Fig. 1).

Then, in S730, based on detected distance L, power receiver ECU 185 refers to the map stored in memory unit 610 and shown in Fig. 12, and determines whether or not detected distance L is smaller than A1.

When distance L is smaller than A1 (YES in S730), power receiver ECU 185 uses switch 120 to switch the coil to the first coil with which shorter distances are detected with higher precision, and detects the distance again (S740).

Then, in S750, power receiver ECU 185 confirms distance L detected by means of the first coil as distance L between power receiving apparatus 110 and power transmitting unit 220 (Fig. 1). The process then proceeds to S760 in which the test signal output command is made OFF.

After this, power receiver ECU 185 outputs power feeding start command CHG to power transmitting apparatus 200 (Fig. 1), so that electric power feeding by means of the currently selected first coil is started (S770).

In contrast, when distance L is A1 or more (NO in S730), step S740 is skipped and the process proceeds to S750. Then, distance L detected by means of the second coil is confirmed as distance L between power receiving apparatus 110 and power transmitting unit 220 (S750). Then, power receiver ECU 185 renders test signal output command TSTFLG1 OFF (S760), and outputs power feeding start command CHG to power transmitting apparatus 200 (Fig. 1), so that electric power feeding by means of the selected second coil is started (S770).

Next, in connection with Fig. 15, a description will be given of the case where a threshold used for determining a coil to be used in detecting the distance (threshold A1 in Fig. 12) and a threshold used for determining a coil to be used in receiving electric power (threshold A10 in Fig. 13) are different from each other.

The flowchart shown in Fig. 15 corresponds to the flowchart in Fig. 14 to which S761, S765 and S766 are added. The description of the same step as that of Fig. 14 will not be repeated.

When distance L is confirmed in S750 and the test signal output command is rendered OFF in S760, power receiver ECU 185 proceeds to S761 to determine whether or not confirmed distance L is smaller than A10.

When distance A10 is smaller than A10 (YES in S761), power receiver ECU 185 switches the coil to be used for receiving electric power to the first coil with relatively higher transmission efficiency η for shorter distances. Then, in S770, power receiver ECU 185 outputs power feeding start command CHG to power transmitting apparatus 200 (Fig. 1).

In contrast, when distance L is A10 or more (NO in 5761), power receiver ECU 185 switches the coil to be used for receiving electric power to the second coil with relatively higher transmission efficiency η for longer distances. Then, in S770, power receiver ECU 185 outputs power feeding start command CHG to power transmitting apparatus 200 (Fig: 1).

As heretofore described, the vehicle power feeding system according to the first embodiment has power receiving apparatus 110 including a plurality of secondary self-resonant coils 112, 113. A switch is made between these secondary self-resonant coils 112, 113 for detecting the distance between power receiving apparatus 110 and power transmitting unit 220. Further, depending on detected distance L, a power-receiving secondary self-resonant coil that has higher transmission efficiency can be selected for feeding electric power. Accordingly, the distance between power receiving apparatus 110 and power transmitting unit 220 can be detected precisely, including distances from longer distances to shorter distances, and the transmission efficiency in transmitting electric power by means of the resonance method can be improved.

### Modification of the First Embodiment

In connection with the first embodiment, the description has been given of the case where two secondary self-resonant coils are provided. In connection with a modification here, a description will be given of the case where three secondary self-resonant coils are provided.

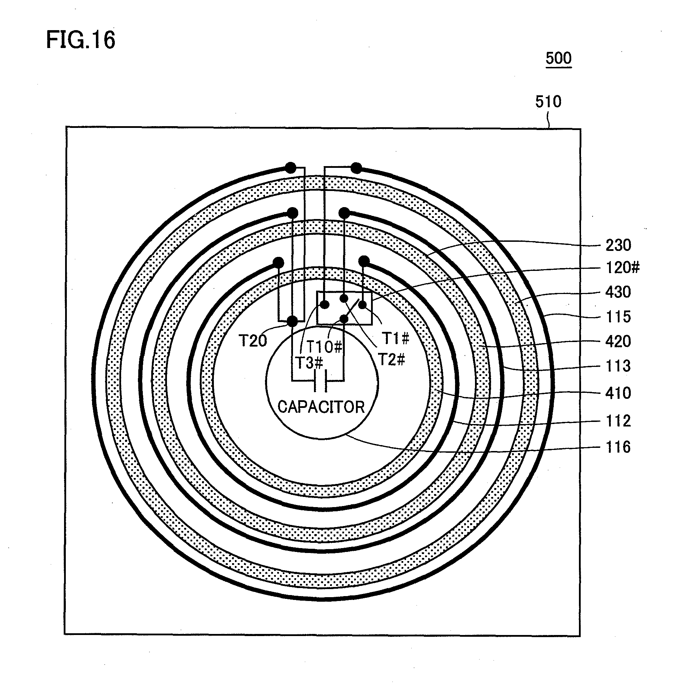

Fig. 16 is a diagram corresponding to Fig. 10 in the first embodiment and showing details of connections in a power receiving unit 500. In Fig. 16, a secondary self-resonant coil 115 (hereinafter also referred to as "third coil") having a larger diameter than secondary self-resonant coil 113 (second coil) in Fig. 10, and a bobbin 430 for mounting the third coil thereon are further provided, and all of the first, second and third coils are housed in one coil case 510. Accordingly, switch 120 for making a switch between two contacts is replaced with a switch 120# capable of making a switch between three contacts. The description of the same feature as Fig. 10 will not be repeated.

Referring to Fig. 16, bobbin 430 is provided concentrically with bobbins 410, 420. Secondary self-resonant coil 115 is wound around and thus mounted on bobbin 430.

Further, one end of secondary self-resonant coil 112, one end of secondary self-resonant coil 113 and one end of secondary self-resonant coil 115 are all connected to one end T20 of capacitor 116. Respective other ends of secondary self-resonant coils 112, 113, 115 are connected respectively to connection terminals T1#, T2#, T3# of switch 120#.

The other end of the capacitor is connected to a connection terminal T10# of switch 120#. Switch 120# makes a switch so that connection terminal T10# is connected to one of connection terminals T1#, T2#, T3#.

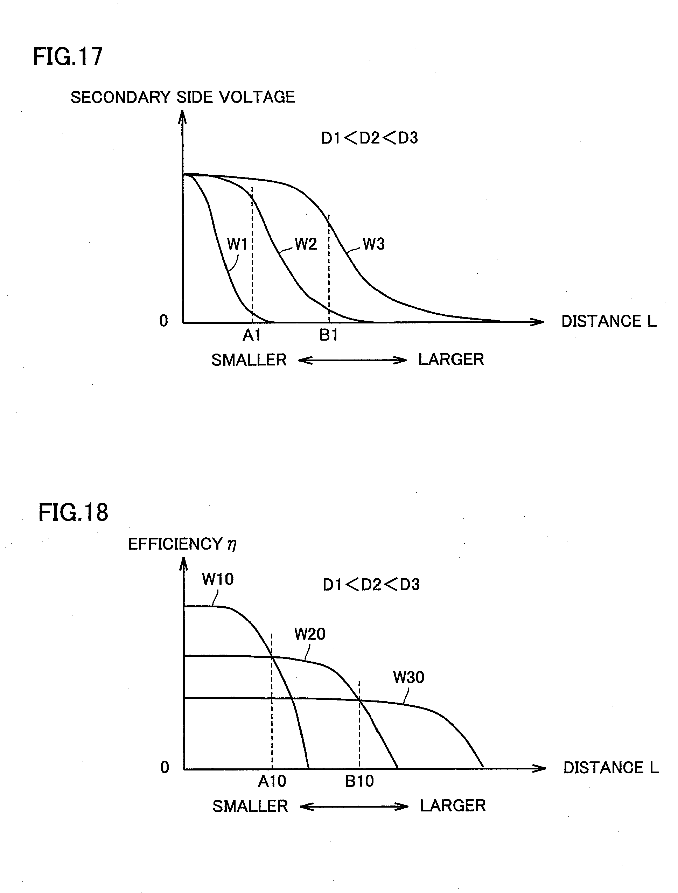

Figs. 17 and 18 correspond respectively to Figs. 12 and 13 in the first embodiment, and illustrate a relation between a distance between power receiving apparatus 110 and power transmitting unit 220 and secondary voltage VH, and a relation between the distance therebetween and transmission efficiency η, respectively. In Figs. 17 and 18, curves W3 and W30 for the third coil are additionally shown.

In Fig. 17, curve W3 corresponds to the third coil. When detected distance L is threshold B1 or more, the third coil is used to detect the distance. When distance L is smaller than B1 and is A1 or more, the second coil is used to detect the distance.

In Fig. 18, curve W30 corresponds to the third coil. When confirmed distance L is threshold B10 or more, the third coil is used to receive electric power. When distance L is smaller than threshold B10 and is A10 or more, the second coil is used to receive electric power.

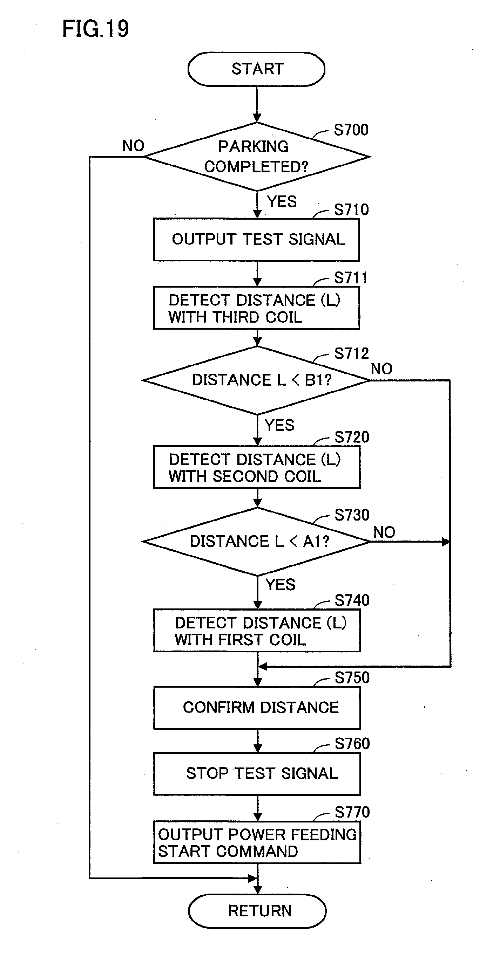

Fig. 19 shows a flowchart illustrating details of a coil switching control process in the case where a threshold for determining a coil to be used in detecting the distance and a threshold for determining a coil to be used in receiving electric power in Figs. 17 and 18 are identical (namely A1 = A10, B1= B10). Fig. 19 corresponds to Fig. 14 in the first embodiment to which S711 and S712 are added. The description of the same step as Fig. 14 will not be repeated.

Referring to Fig. 19, power receiver ECU 185 outputs the test signal output command in S710 and proceeds to S711 in which power receiver ECU 185 first selects the third coil with which the longest distance can be detected, and detects the distance.

Then, in S712, it is determined whether or not distance L detected by means of the third coil is smaller than threshold B1.

When distance L detected by means of the third coil is threshold B1 or more (NO in S712), S720 to S740 are skipped and the process proceeds to S750. Then, in S750, power receiver ECU 185 confirms distance L detected with the third coil as distance L between power receiving apparatus 110 and power transmitting unit 220. In S760, the test signal output command is rendered OFF.

After this, power feeding start command CHG is output to power transmitting apparatus 200 so that power feeding by means of the currently selected third coil is started (S770).

In contrast, when distance L detected by means of the third coil is smaller than threshold B1 (YES in S712), the process proceeds to S720 in which the coil is switched to the second coil to detect the distance. The subsequent steps are similar to those described in connection with Fig. 14, and the description of the same step as Fig. 14 will not be repeated.

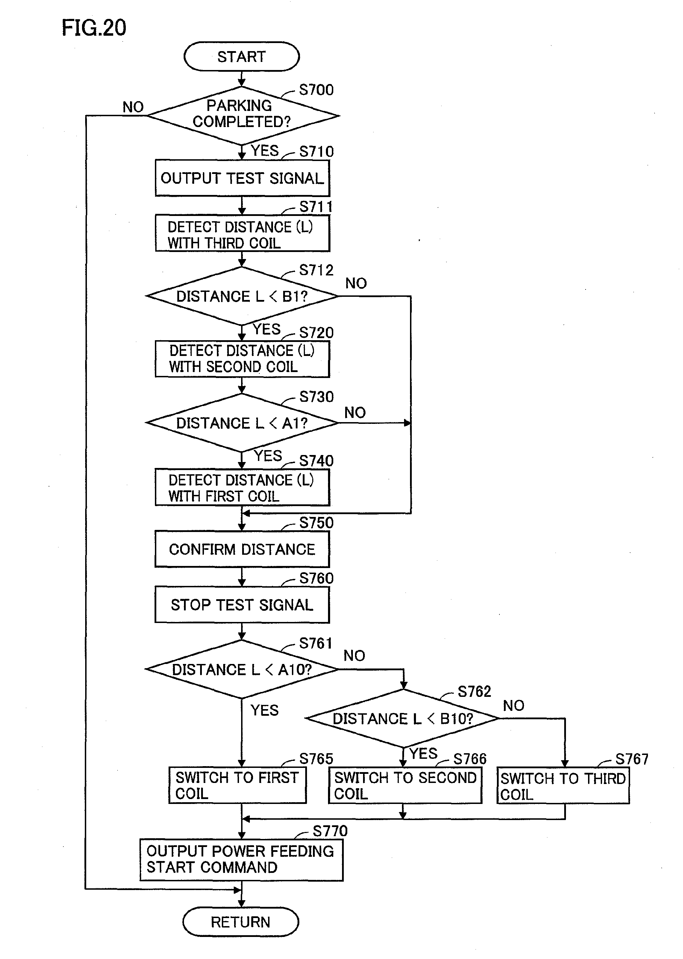

Fig. 20 shows a flowchart illustrating details of a coil switching control process in the case where a threshold used for determining a coil in detecting the distance and a threshold used for determining a coil in receiving electric power are different (namely A1 ≠ A10, B1 ≠ B10). Fig. 20 corresponds to Fig. 15 in the first embodiment to which S711, S712, S762, S767 are added. Among these steps, S711 and S712 are similar to those in Fig. 19. The description of the same step as Figs. 15 and 19 will not be repeated.

Referring to Fig. 20, after distance L is confirmed in S750 and the test signal output command is rendered OFF in S760, power receiver ECU 185 proceeds to S761 to determine whether or not confirmed distance L is smaller than A10.

When distance L is smaller than A10 (YES in S761), power receiver ECU 185 switches the coil used for receiving electric power to the first coil. The process then proceeds to S770.

In contrast, when distance L is A10 or more (NO in S761), the process proceeds to S762 to determine whether distance L is smaller than B10.

When distance L is smaller than B10 (YES in S762), power receiver ECU 185 switches the coil to be used for receiving electric power to the second coil. The process then proceeds to S770.

In contrast, when distance L is B10 or more (NO in S762), power receiver ECU 185 switches the coil to be used for receiving electric power to the third coil. The process then proceeds to S770.

In S770, power receiver ECU 185 outputs power feeding start command CHG to power transmitting apparatus 200.

In the case where three secondary self-resonant coils are provided like the above-described modification, the coil switching control here is applicable as well.

In the modification, the third coil having a larger diameter is added. Alternatively, a coil having a diameter between the diameter of the first coil and the diameter of the second coil may be added, or a coil having a smaller diameter than the first coil may be added. Moreover, four or more secondary self-resonant coils may be included.

In other words, a combination of appropriate coil diameters may be selected on the condition that the coil size falls within the range that can be mounted on electrically powered vehicle 100 and the installation cost falls within a tolerable range. In this way, a desired detectable distance can be ensured while the precision in detecting the distance can be improved for distances including longer distances and shorter distances. Further, depending on the detected distance, the coil to be used can be switched to improve the transmission efficiency in feeding electric power.

### Second Embodiment

In connection with the first embodiment and its modification, the description has been given of the case where the power receiving apparatus includes a plurality of secondary self-resonant coils. In connection with a second embodiment here, a description will be given of the case where a power transmitting apparatus includes a plurality of primary self-resonant coils.

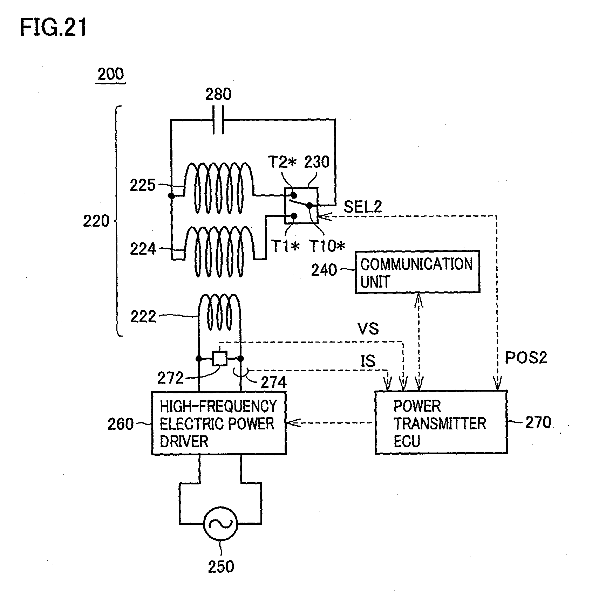

Fig. 21 shows a detailed configuration diagram of power transmitting apparatus 200 in the second embodiment. Fig. 21 corresponds to Fig. 5 in the first embodiment including power transmitting unit 220 to which a primary self-resonant second coil 225 and a switch 230 are added. In the following, the description of the same feature as Fig. 5 will not be repeated.

Referring to Fig. 21, primary self-resonant coils 224, 225 have respective resonance frequencies identical to each other and respective diameters different from each other. One end of primary self-resonant coil 224 and one end of primary self-resonant coil 225 are connected to each other and respective other ends are connected respectively to connection ends T 1 * and T1 * of switch 230.

Further, capacitor 280 has one end connected to a connection node of primary self-resonant coils 224, 225 and the other end connected to a connection end T10* of switch 230.

Switch 230 follows switch command SEL2 of power transmitter ECU 270 to make a switch so that the connection end to which capacitor 280 is connected is connected to the connection end of one of primary self-resonant coils 224, 225. At this time, switch 230 outputs to power transmitter ECU 270 signal POS2 indicating which of the primary self-resonant coils is connected to the capacitor.

As seen from above, when primary self-resonant coil 224, 225 is connected by switch 230 to capacitor 280, an LC resonant coil having capacitor 280 connected to the two ends of the coil is formed. Resonance with a secondary self-resonant coil of power receiving apparatus 110 through an electromagnetic field is used to transmit electric power to power receiving apparatus 110.

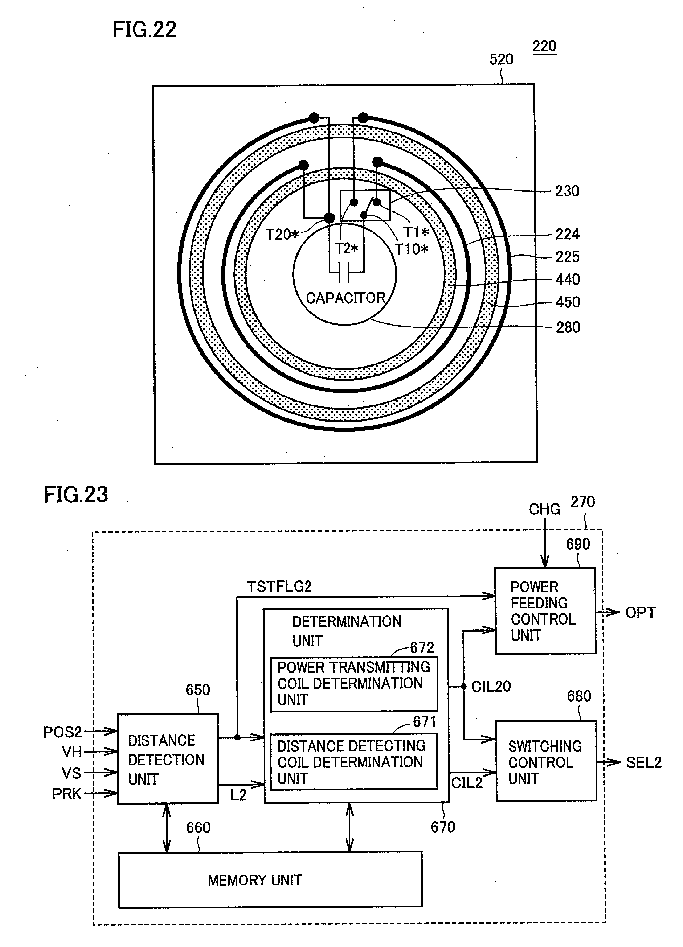

Next, Fig. 22 will be used to illustrate details of connections in power transmitting unit 220. Fig. 22 shows a cross section of power transmitting unit 220 like Fig. 10 in the first embodiment.

The general arrangement and connections of constituent devices in power transmitting unit 220 are similar to the configuration in Figs. 9 and 10 in the first embodiment. Specifically, secondary coil 114 in Fig. 9 corresponds to primary coil 222, and secondary self-resonant coils 112, 113 correspond to primary self-resonant coils 224, 225. Further, capacitor 116 corresponds to capacitor 280, and coil case 510 corresponds to coil case 520. Furthermore, bobbins 410, 420 correspond to bobbins 440, 450, and switch 120 correspond to switch 230. The description of details of each device will not be repeated.

Referring to Fig. 22, one end of primary self-resonant coil 224 and one end of primary self-resonant coil 225 are both connected to one end T20* of capacitor 280. Respective other ends of primary self-resonant coils 224, 225 are connected respectively to connection terminals T1 * and T2* of switch 230.

The other end of capacitor 280 is connected to connection terminal T10* of switch 230. Switch 230 makes a switch so that connection terminal T10* is connected to connection terminal T1 or T2*^{.}

Fig. 23 shows a diagram of functional blocks involved in switching control for primary self-resonant coils that is performed by power transmitter ECU 270 in the present second embodiment. Each functional block shown in Fig. 23 is implemented through processing by power transmitter ECU 270 in a hardware or software manner.

Referring to Fig. 23, power transmitter ECU 270 includes a distance detection unit 650, a memory unit 660, a determination unit 670, a switching control unit 680, and a power feeding control unit 690. Determination unit 670 includes a distance detecting coil determination unit 671 and a power receiving coil determination unit 672.

Distance detection unit 650 receives, as inputs, power transmitter voltage (primary voltage) VS from voltage sensor 272 and signal POS2 provided from switch 230 for indicating a current switch position. Via communication unit 240, distance detection unit 650 also receives, as inputs, signal PRK representing completion of parking of electrically powered vehicle 100, and secondary voltage VH in response to a distance detection test signal that is detected by power receiving apparatus 110.

When distance detection unit 650 detects from signal PRK the fact that parking of electrically powered vehicle 100 is completed, distance detection unit 650 outputs to determination unit 670 and power feeding control unit 690, test signal output command TSTFLG2 that is rendered ON to output a test signal for detecting the distance. While test signal output command TSTFLG2 is ON, power feeding control unit 690 outputs predetermined electric power smaller than the electric power that is supplied during execution of power feeding based on the power feeding start command from the electrically powered vehicle.

Further, distance detection unit 650 detects distance L2 between power transmitting unit 220 and power receiving apparatus 110, based on secondary voltage VH received from power receiving apparatus 110 and provided in response to the test signal, primary voltage VS detected by voltage sensor 272, and switch position POS2 of switch 230, and outputs detected distance L2 to determination unit 670. When detected distance L2 is finally confirmed, test signal output command TSTFLG2 is rendered OFF.

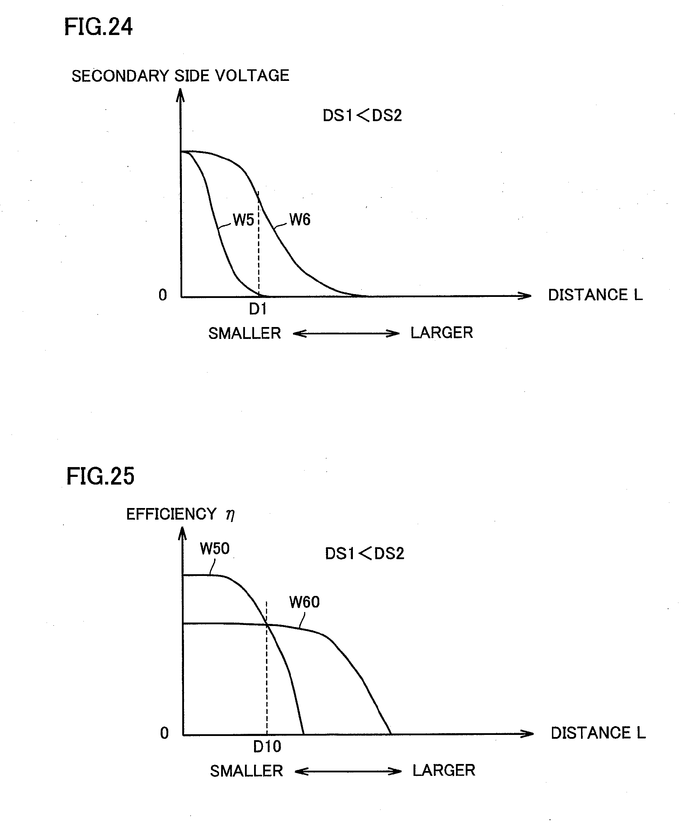

Specifically, distance detection unit 650 detects distance L2 following a map as shown in Fig. 24 and stored in advance in memory unit 660. Fig. 24 is an example of the map stored in memory unit 660 for use in detection of the distance as described above, with respect to a certain primary voltage. In Fig. 24, curve W5 represents a secondary voltage detected in power receiving apparatus 110 when primary self-resonant coil 224 having a smaller diameter (hereinafter also referred to as "fourth coil") is used, and curve W6 represents a secondary voltage detected in power receiving apparatus 110 when primary self-resonant coil 225 having a larger diameter (hereinafter also referred to as "fifth coil") is used.

Like the first embodiment, depending on the diameter of the primary self-resonant coil used for transmitting electric power, the detectable distance and the precision of the detected distance vary. Therefore, distance detection unit 650 first uses the fifth coil with which a longer distance can be detected, transmits electric power, and detects distance L2. Then, when the distance can be detected through power transmission by means of the fourth coil, switching control unit 680 switches the coil to be used for detecting the distance to the fourth coil. Distance detection unit 650 thus detects distance L2 more precisely by transmitting electric power by means of the fourth coil.

Referring to Fig. 23 again, determination unit 670 receives, as inputs, detected distance L2 and test signal output command TSTFLG2 from distance detection unit 650.

While the distance is detected (namely test signal output command TSTFLG2 is ON), distance detecting coil determination unit 671 determines, depending on whether detected distance L2 is smaller than a predetermined threshold or not, which of the fourth and fifth coils is to be used to detect the distance.

Specifically, distance detecting coil determination unit 671 refers to the map stored in memory unit 660 and shown in Fig. 24. In the case where distance L2 detected by means of the fifth coil is D 1 or more, distance detecting coil determination unit 671 determines that the distance detected by the fifth coil is to be used and, in the case where this distance L2 is smaller than D1, distance detecting coil determination unit 671 determines that the distance detected by means of the fourth coil is to be used. Then, distance detecting coil determination unit 671 outputs to switching control unit 680 coil determination signal CIL2 representing the result of determination.

When the detected distance is confirmed (namely test signal output command TSTFLG2 is OFF), power transmitting coil determination unit 672 determines, based on distance L2 between power transmitting unit 220 and power receiving apparatus 110, which of the fourth and fifth coils is to be used for transmitting electric power.

Specifically, power transmitting coil determination unit 672 refers to a map showing a relation between distance L2 and electric power transmission efficiency η as shown in Fig. 25, and selects a primary self-resonant coil providing higher transmission efficiency η for detected distance L2. In Fig. 25, curve W50 represents the transmission efficiency of the fourth coil, and curve W60 represents the transmission efficiency of the fifth coil. As shown in Fig. 25, as the coil diameter is smaller, the transmission efficiency is relatively higher while the distance over which electric power can be fed is shorter. In contrast, as the coil diameter is larger, the transmission efficiency is relatively lower while the distance over which electric power can be fed is longer. In the case where detected distance L2 is smaller than the distance for which the transmission efficiency of the fifth coil is higher than that of the fourth coil (distance D10 in Fig. 25 for example), power transmitting coil determination unit 672 determines that the fourth coil is to be selected and, when detected distance L2 is D10 or more, the determination unit determines that the fifth coil is to be selected. Then, power transmitting coil determination unit 672 outputs coil determination signal CIL20 representing the result of determination to switching control unit 680 and power feeding control unit 690.

Referring again to Fig. 23, when the distance is to be detected, switching control unit 680 outputs coil switch command SEL2 to switch 230, based on coil determination signal CIL2 that is input from determination unit 670. When electric power is to be transmitted, switching control unit 680 outputs coil switch command SEL2 to switch 230, based on coil determination signal CIL20 that is input from determination unit 670.

Following switch signal SEL2, switch 230 switches the coil used for detecting the distance and the coil used for transmitting electric power.

In the case where power feeding control unit 690 receives input of test signal output command TSTFLG2 from distance detection unit 650, power feeding control unit 690 controls high-frequency electric power driver 260 so that electric power is fed for detecting the distance. In the case where input of power feeding start command CHG is received from electrically powered vehicle 100, high-frequency electric power driver 260 is controlled so that practical and regular electric power feeding is performed.

In the description above, the threshold used for determination as to switching of the coil for use in detecting the distance (threshold D 1 in Fig. 24), and the threshold for determination as to switching of the coil for use in transmitting electric power (threshold D10 in Fig. 25) may be set to the same value. In this case, the determination as to the coil to be used for transmitting electric power that is made by determination unit 670 is skipped, and the coil finally used for detecting the distance is used as a coil for transmitting electric power, and power feeding is started.

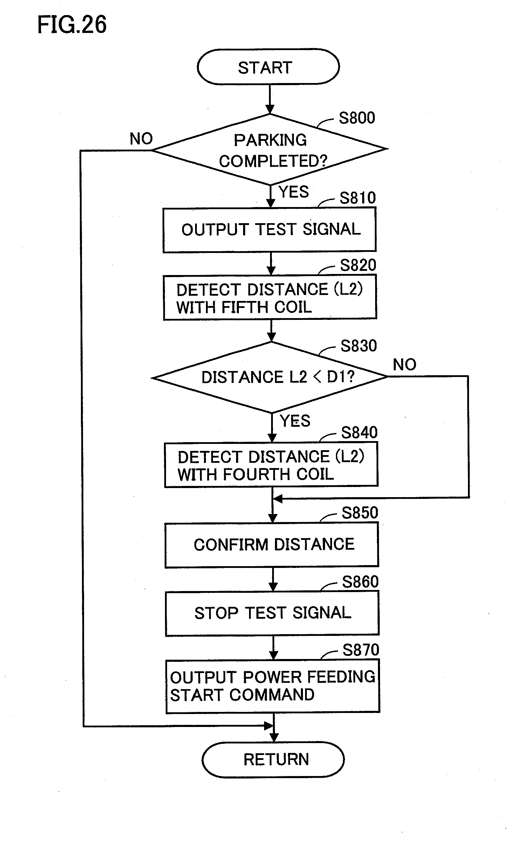

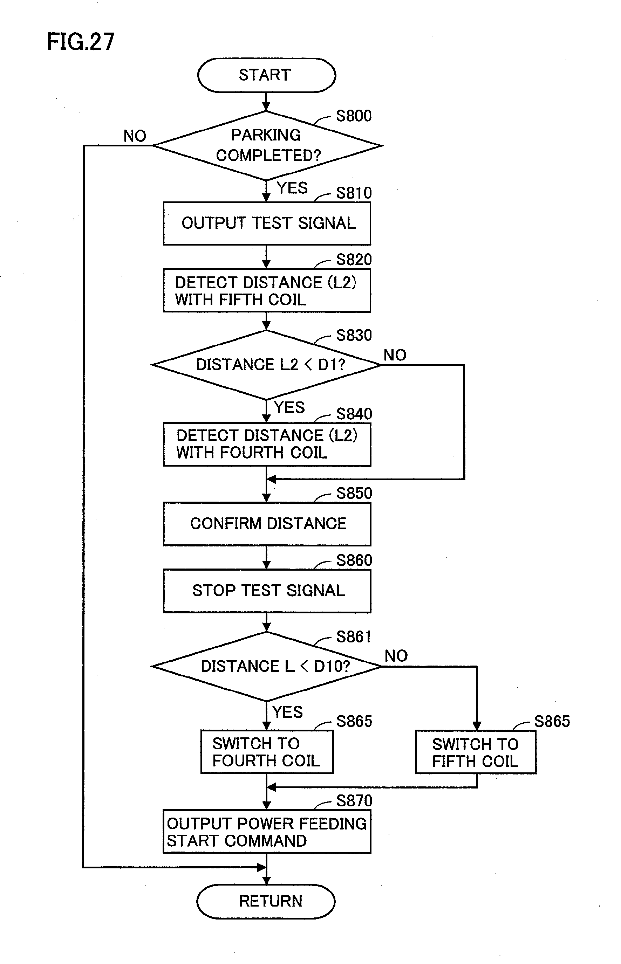

Figs. 26 and 27 each show a flowchart for illustrating details of a coil switching control process followed by power transmitter ECU 270. In the flowcharts shown in Figs. 26 and 27 each, a program stored in advance in power transmitter ECU 270 is called from a main routine and executed in predetermined cycles. Alternatively, for a part of the steps, dedicated hardware (electronic circuit) may be configured to execute the process.

In connection with Fig. 26, a description will be given of the case where a threshold for determining a coil to be used in detecting the distance (threshold D1 in Fig. 24) and a threshold for determining a coil to be used in transmitting electric power (threshold D10 in Fig. 25) are identical, namely D1= D10.

Referring to Figs. 21, 23 and 26, power transmitter ECU 270 determines in step S800 whether or not parking of electrically powered vehicle 100 (Fig. 1) is completed, based on signal PRK that represents the fact that parking of electrically powered vehicle 100 (Fig. 1) is completed and is received from electrically powered vehicle 100 (Fig. 1) via communication unit 240.

When parking of electrically powered vehicle 100 (Fig. 1) is not completed (NO in S800), the process returns to the main routine without execution of this switching control.

When parking of electrically powered vehicle 100 (Fig. 1) is completed (YES in S800), the process proceeds to S810 in which power transmitter ECU 270 outputs to determination unit 670 and power feeding control unit 690, test signal output command TSTFLG2 that is rendered ON.

Next, in S820, power transmitter ECU 270 uses distance detection unit 650 to select the fifth coil and detect distance L2 between power receiving apparatus 110 (Fig. 1) and power transmitting unit 220.

Then, in S830, power transmitter ECU 270 refers to the map stored in memory unit 660 and as shown in Fig. 24, based on detected distance L2, and determines whether or not detected distance L2 is smaller than D1.

When distance L2 is smaller than D1 (YES in S830), power transmitter ECU 270 switches the coil to the fourth coil, and detects the distance again (S840).

Then, in S850, power transmitter ECU 270 confirms distance L2 detected by means of the fourth coil as distance L2 between power receiving apparatus 110 (Fig. 1) and power transmitting unit 220 and, in S860, renders test signal output command TSTFLG2 OFF.

After this, power feeding control unit 690 uses the currently selected fourth coil and starts feeding electric power (S870).

In contrast, when distance L2 is D1 or more (NO in S830), step S840 is skipped and the process proceeds to S850. Then, distance L2 detected by means of the fifth coil is confirmed as distance L2 between power receiving apparatus 110 (Fig. 1) and power transmitting unit 220. Then, test signal output command TSTFLG2 is rendered OFF in S860, and the currently selected fifth coil is used to start feeding electric power (S870).

Next, in connection with Fig. 27, a description will be given of the case where a threshold for determining a coil to be used in detecting the distance (threshold D 1 in Fig. 24) and a threshold for determining a coil to be used in receiving electric power (threshold D10 in Fig. 25) are different from each other.

The flowchart shown in Fig. 27 corresponds to the flowchart in Fig. 26 to which S861, S865 and S866 are added. The description of the same step as that of Fig. 26 will not be repeated.

After distance L2 is confirmed in S850 and test signal output command TSTFLG2 is rendered OFF in S860, power transmitter ECU 270 proceeds to S861 to determine whether or not confirmed distance L2 is smaller than D10.

When distance L2 is smaller than D10 (YES in S861), power transmitter ECU 270 switches the coil to be used for transmitting electric power to the fourth coil. Then, in S870, power transmitter ECU 270 starts feeding electric power.

In contrast, when distance L2 is D10 or more (NO in S861), power transmitter ECU 270 switches the coil to be used for transmitting electric power to the fifth coil. Then, in S870, power transmitter ECU 270 starts feeding electric power.

As heretofore described, power transmitting unit 220 includes a plurality of primary self-resonant coils 224, 225. The distance between power receiving apparatus 110 and power transmitting unit 220 is detected. Based on the detected distance, a primary self-resonant coil for transmitting electric power is selected to feed the electric power. Accordingly, the distance between power receiving apparatus 110 and power transmitting unit 220 can be detected precisely, and the transmission efficiency in transmitting electric power by means of the resonance method can be improved.

The second embodiment is also applicable to the case where three or more primary self-resonant coils are included like the modification of the first embodiment.

Further, the system may be configured so that both of the diameter of the primary self-resonant coil and the diameter of the secondary self-resonant coil can be switched, like a combination of the first and second embodiments. In this case, the vehicle's driver may select one of the diameter of the primary self-resonant coil and the diameter of the secondary self-resonant coil that is to be preferentially switched, or the coil to be switched may be automatically selected depending on other conditions (the specification or the like of the coil, for example). Furthermore, both of respective diameters of the primary and secondary self-resonant coils may be switched and a combination of respective diameters of the primary and secondary self-resonant coils may be changed.

It should be noted that primary coils 220, 320 and secondary coils 114, 350 in the present embodiments are examples of "electromagnetic coil" of the present invention. Further, power receiver ECU 185 and power transmitter ECU 270 are examples of "controller" of the present invention. Moreover, inverters 164, 166 and motor generators 172, 174 are examples of "electrical drive apparatus" of the present invention.

It should be construed that embodiments disclosed herein are by way of illustration in all respects, not by way of limitation. It is intended that the scope of the present invention is defined by claims, not by the above description of the embodiments, and includes all modifications and variations equivalent in meaning and scope to the claims.

## Claims

1. A coil unit (220, 500) for performing at least one of electric power transmission and electric power reception through electromagnetic resonance, comprising:
a plurality of self-resonant coils (112, 113, 115, 224, 225, 330, 340) with respective coil diameters different from each other for resonating electromagnetically; and
a switch (120, 120#, 230) configured to select one of said plurality of self-resonant coils (112, 113, 115, 224, 225, 330, 340).

2. The coil unit (220, 500) according to claim 1, further comprising an electromagnetic induction coil (114, 222, 320, 350) configured to enable at least one of electric power transmission and electric power reception to and from said plurality of self-resonant coils (112, 113, 115, 224, 225, 330, 340) through electromagnetic induction, wherein
said electromagnetic induction coil (114, 222, 320, 350) is provided in common to said plurality of self-resonant coils (112, 113, 115, 224, 225, 330, 340).

3. The coil unit (220, 500) according to claim 2, further comprising a capacitor (116, 280) for adjusting a resonance frequency, wherein
said capacitor (116, 280) is provided in common to said plurality of self-resonant coils (112, 113, 115, 224, 225, 330, 340), and
said plurality of self-resonant coils (112, 113, 115, 224, 225, 330, 340) when connected to said capacitor (116, 280) have respective resonance frequencies identical to each other.

4. The coil unit (220, 500) according to claim 1, further comprising a capacitor (116, 280) for adjusting a resonance frequency, wherein
said capacitor (116, 280) is provided in common to said plurality of self-resonant coils (112, 113, 115, 224, 225, 330, 340).

5. The coil unit (220, 500) according to claim 4, further comprising a plurality of bobbins (410, 420, 430, 440, 450) on which said plurality of self-resonant coils are mounted respectively, wherein
said plurality of bobbins (410, 420, 430, 440, 450) are arranged concentrically, and
said capacitor (116, 280) is housed in a bobbin of a minimum diameter among said plurality of bobbins (410, 420, 430, 440, 450).

6. The coil unit (220, 500) according to claim 1, further comprising a coil case (500, S 10) for housing said plurality of self-resonant coils (112, 113, 115, 224, 225, 330, 340) in said coil case.

7. The coil unit (220, 500) according to claim 1, wherein
said plurality of self-resonant coils (112, 113, 115, 224, 225, 330, 340) have respective resonance frequencies identical to each other.

8. A noncontact electric power receiving apparatus (110) comprising the coil unit (500) as recited in any one of claims 1 to 7, for receiving electric power through electromagnetic resonance with an electric power transmitting apparatus (220).

9. The noncontact electric power receiving apparatus (110) according to claim 8, further comprising a controller (185) for controlling said switch (120, 120#), wherein
said controller (185) includes:
a distance detection unit (600) configured to detect a distance between said electric power transmitting apparatus (220) and one of said plurality of self-resonant coils (112, 113, 115, 340);
a determination unit (620) configured to determine, based on the distance detected by said distance detection unit (600), a self-resonant coil (112, 113, 115, 340) used for transmitting electric power among said plurality of self-resonant coils (112, 113, 115, 340); and
a switching control unit (630) configured to control said switch (120, 120#) based on a result of determination by said determination unit (620).

10. A noncontact electric power feeding system for transmitting electric power from a power supply, from the electric power transmitting apparatus (200) to an electric power receiving apparatus (110) through electromagnetic resonance, said noncontact electric power feeding system comprising:
said electric power transmitting apparatus (200); and
said electric power receiving apparatus (110),
said electric power receiving apparatus (110) including the noncontact electric power receiving apparatus as recited in claim 8.

11. A vehicle (100) comprising:
an electric power receiving apparatus (110) configured to receive, from the electric power transmitting apparatus (200) through electromagnetic resonance, electric power from a power supply external to said vehicle (100); and
an electrical drive apparatus (164, 166, 172, 174) configured to generate driving force for propelling the vehicle from electric power received by said electric power receiving apparatus (110),
said electric power receiving apparatus (110) including the noncontact electric power receiving apparatus as recited in claim 8.

12. The vehicle according to claim 11, wherein
said noncontact electric power receiving apparatus further comprises a controller (185) for controlling said switch (120, 120#), and
said controller (185) includes:
a distance detection unit (600) configured to detect a distance between said electric power transmitting apparatus (220) and one of said plurality of self-resonant coils (112, 113, 115, 340);
a determination unit (620) configured to determine, based on the distance detected by said distance detection unit (600), a self-resonant coil (112, 113, 115, 340) used for transmitting electric power among said plurality of self-resonant coils (112, 113, 115, 340); and
a switching control unit (630) configured to control said switch (120, 120#) based on a result of determination by said determination unit (620).

13. A noncontact electric power transmitting apparatus (200) comprising the coil unit (220) as recited in any one of claims 1 to 7, for transmitting electric power through electromagnetic resonance with an electric power receiving apparatus (110).

14. The noncontact electric power transmitting apparatus (200) according to claim 13, further comprising a controller (270) for controlling said switch (230), wherein
said controller (270) includes:
a distance detection unit (650) configured to detect a distance between said electric power receiving apparatus (110) and one of said plurality of self-resonant coils (224, 225, 330);
a determination unit (670) configured to determine, based on the distance detected by said distance detection unit (650), a self-resonant coil (224, 225, 330) used for transmitting electric power among said plurality of self-resonant coils (224, 225, 330); and
a switching control unit (680) configured to control said switch (230) based on a result of determination by said determination unit (670).

15. A noncontact electric power feeding system for transmitting electric power from a power supply, from an electric power transmitting apparatus (200) to the electric power receiving apparatus (110) through electromagnetic resonance, said noncontact electric power feeding system comprising:
said electric power transmitting apparatus (200); and
said electric power receiving apparatus (110),
said electric power transmitting apparatus (200) including the noncontact electric power transmitting apparatus as recited in claim 13.
